(19) Europäisches Patentamt
European Patent Office
Office européen des brevets

(11) **EP 2 673 516 B1**

(12) **EUROPÄISCHE PATENTSCHRIFT**

(45) Veröffentlichungstag und Bekanntmachung des Hinweises auf die Patenterteilung:
**04.11.2020 Patentblatt 2020/45**

(21) Anmeldenummer: **12704369.3**

(22) Anmeldetag: **09.02.2012**

(51) Int Cl.:
***F16B 11/00*** *(2006.01)*     ***F16B 47/00*** *(2006.01)*

(86) Internationale Anmeldenummer:
**PCT/EP2012/000616**

(87) Internationale Veröffentlichungsnummer:
**WO 2012/107240 (16.08.2012 Gazette 2012/33)**

(54) **VERBINDUNGSELEMENT ZUM AUFKLEBEN AUF EINER BAUTEILOBERFLÄCHE SOWIE HERSTELLUNGSVERFAHREN UND BEFESTIGUNGSVERFAHREN DAFÜR**

CONNECTING ELEMENT FOR GLUING ONTO A COMPONENT SURFACE AND PRODUCTION METHOD AND ATTACHMENT METHOD THEREFOR

ÉLÉMENT DE LIAISON À COLLER SUR UNE SURFACE DE PIÈCE, PROCÉDÉ DE FABRICATION ET PROCÉDÉ DE FIXATION ASSOCIÉS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.02.2011 DE 102011000603**

(43) Veröffentlichungstag der Anmeldung:
**18.12.2013 Patentblatt 2013/51**

(73) Patentinhaber: **Böllhoff Verbindungstechnik GmbH**
**33649 Bielefeld (DE)**

(72) Erfinder: **Drüke, Franz**
**32758 Detmold (DE)**

(74) Vertreter: **Heyer, Volker et al**
**HWP Intellectual Property**
**Ridlerstrasse 35**
**80339 München (DE)**

(56) Entgegenhaltungen:
DE-A1-102007 048 022    DE-A1-102009 003 391
DE-A1-102009 031 188    GB-A- 564 225
JP-A- 2005 347 637    US-A- 4 726 561
US-A- 4 842 912    US-A1- 2009 056 865
US-B1- 6 431 508

**Beschreibung**

1. Gebiet der Erfindung

Die vorliegende Erfindung betrifft ein Verbindungselement zum Aufkleben auf einer Bauteiloberfläche, ein Herstellungsverfahren für dieses Verbindungselement sowie ein Befestigungsverfahren für das Verbindungselement auf der Bauteiloberfläche.

2. Hintergrund der Erfindung

Im Stand der Technik sind verschiedene Verbindungselemente bekannt, die mithilfe von durch Wärme aktivierbarem Klebstoff oder Schmelzklebstoff auf einer Bauteiloberfläche befestigbar sind. Diese Verbindungselemente sind beispielsweise in EP 0 741 842 B1, US 3,3532,316, DE 103 59 466 A1, EP 0 504 957 A2, US 4,842,912 und DE 10 2006 012 411 A1 beschrieben.

Zum Befestigen dieser Verbindungselemente auf einer Bauteiloberfläche weisen sie einen Teller oder eine tellerähnliche Struktur auf. Dieser Teller umfasst eine Befestigungsfläche, die der Bauteiloberfläche zugewandt ist. Auf ihr wird beispielsweise der Schmelzklebstoff aufgebracht, der dann durch Wärmezufuhr aktiviert und ausgehärtet wird. Unterschiedliche Gestaltungen dieser Verbindungselemente zeigen eine plane Befestigungsfläche, eine Befestigungsfläche mit Stegen oder abstützenden Vorsprüngen sowie eine senkenförmige Befestigungsfläche, die den Schmelzklebstoff aufnimmt.

Diese Verbindungselemente haben häufig das Problem, dass zwar der Teller ausreichend auf der Bauteiloberfläche befestigt ist, jedoch der im Teller befestigte Bolzen den mechanischen Belastungen beispielsweise bei der Befestigung eines Strukturbauteils nicht stand hält. Dies führt dazu, dass die Befestigung des Strukturbauteils frühzeitig versagt, obwohl das Verbindungselement noch ausreichend mit der Bauteiloberfläche verklebt ist.

Ein weiterer Nachteil besteht darin, dass die bekannten Verbindungselemente für die Anwendung eines wärmeaktivierbaren Klebstoffs ausgelegt sind. Wird hingegen ein Klebstoff verwendet, der durch Licht zu aktivieren oder auszuhärten ist, erreicht das von außen eingestrahlte Licht durch die fehlende Lichtdurchlässigkeit des Verbindungselements erst gar nicht oder in zu geringer Intensität den Klebstoff. Dies führt dazu, dass der Klebstoff nicht ausreichend aushärtet und somit das Verbindungselement nicht verlässlich auf der Bauteiloberfläche befestigt werden kann.

Ein Montagesystem zur raschen Anbringung von Befestigungselementen mittels lichtaushärtenden Klebstoffen ist in DE 10 2009 031 188 A1 beschrieben. Das System umfasst ein oder mehrere Befestigungselemente, eine Leuchtvorrichtung und/oder ein Haft- und Verbindungsmittel. Bei dem Haft- und Verbindungsmittel handelt es sich um einen lichtaushärtenden Klebstoff. Die ein oder mehreren Befestigungselemente können durch Einbringen eines Haft- und Verbindungsmittels in einen von der Montagefläche und Komponenten des Befestigungselements gebildeten Kleberaum befestigt werden. Zur Bestrahlung des Haft- und Verbindungsmittels weist das Befestigungselement mindestens eine mindestens teilweise lichtdurchlässige Komponente auf.

Ein Klebstoff sowie ein Verfahren zum Anbringen und Lösen von Gegenständen sind in US 2009/0056865 A1 beschrieben. Hierbei sind polymerische Klebezusammensetzungen und Verfahren zum Aushärten unter Verwendung von Bestrahlungsvorrichtungen zum schnellen Binden und Befestigen eines Befestigungsteils an einer Strukturoberfläche beschrieben. Die Klebstoffzusammensetzung umfasst Additive, die direkt oder indirekt die von einer Bestrahlungsvorrichtung ausgesendeten Strahlen absorbieren, um schnell und gleichmäßig den Klebstoff zu schmelzen und die Oberfläche des Materials des Befestigungsteils an der Strukturoberfläche zu befestigen. Ebenso ist ein Verfahren beschrieben, um die Klebstoffverbindung umzukehren und das Befestigungteil zu lösen.

Es ist daher die Aufgabe vorliegender Erfindung, ein Verbindungselement zum Aufkleben auf einer Bauteiloberfläche mithilfe eines lichtaushärtenden Klebstoffs bereitzustellen. Eine weitere Aufgabe besteht darin, ein Herstellungsverfahren sowie ein Befestigungsverfahren für dieses Verbindungselement zu liefern.

3. Zusammenfassung der Erfindung

Die obige Aufgabe wird durch ein Verbindungselement gemäß dem unabhängigen Anspruch 1, ein Herstellungsverfahren für dieses Verbindungselement gemäß den unabhängigen Patentansprüchen 7 und 16 sowie einem Befestigungsverfahren für ein Verbindungselement gemäß den unabhängigen Patentansprüchen 10 und 14 gelöst. Weiterentwicklungen und vorteilhafte Ausgestaltungen vorliegender Erfindung gehen aus der Beschreibung, den begleitenden Zeichnungen sowie den anhängenden Ansprüchen hervor.

Das erfindungsgemäße Verbindungselement zum Aufkleben auf einer Bauteiloberfläche, sodass daran ein Teil befestigbar ist, weist die folgenden Merkmale auf: einen Haltebolzen mit einem Bolzenabschnitt, an dem das Teil befestigbar ist, und mit einer Verankerung sowie einen Teller aus mit Licht durchstrahlbarem Material, in dem der Haltebolzen über die Verankerung mit einer auszugshemmenden Form derart befestigt ist, dass der Haltebolzen aufgrund der Verankerung auszugssicher im Teller angeordnet ist.

Das erfindungsgemäße Verbindungselement ist an das Befestigen mithilfe eines lichtaktivierbaren oder lichtaushärtbaren Klebstoffs angepasst. Zu diesem Zweck ist der Teller des Verbindungselements aus einem lichtdurchlässigen Material hergestellt, sodass das Licht aus allen Raumrichtungen bis zu dem lichtempfindlichen Klebstoff unterhalb des Tellers oder auf der Bauteiloberfläche gelangen kann. Um den Haltebolzen des Verbindungselements verlässlich im Teller befestigen zu können, ist eine spezielle Verankerung des Haltebolzens in den Teller eingeformt. Diese Verankerung ist derart strukturiert, dass ein Verdrehen des Haltebolzens um seine Längsachse innerhalb des Tellers sowie ein Herauslösen des Haltebolzens aus dem Teller verhindert ist.

Zu diesem Zweck weist die Verankerung bevorzugt bezogen auf die Längsachse des Haltebolzens einen Hinterschnitt in Form einer lateralen, vorzugsweise radialen, Aufweitung auf. Diese Aufweitung, die in einer bevorzugten Ausgestaltung als eine flächige Struktur quer oder winklig ungleich 90 ° zur Längsachse des Haltebolzens angeordnet ist, umfasst einen größeren Querschnitt als der Haltebolzen. Diese größere Querschnittsausdehnung der Verankerung im Vergleich zum Haltebolzen verhinderte ein Verkippen des Haltebolzens innerhalb des Tellers und sorgt für eine Einleitung mechanischer Belastungen vom Haltebolzen in den gesamten Teller des Verbindungselements.

Um das Einstrahlen von Licht auch in den Bereich unterhalb des Haltebolzens an der Befestigungsfläche des Tellers zu ermöglichen, ist die flächige Struktur der Verankerung bevorzugt in Teilbereichen unterbrochen. Es ist ebenfalls bevorzugt, die Verankerung als geschlossene flächige Struktur auszubilden. Gemäß einer weiteren Ausführungsform ist die Verankerung im Querschnitt kegelförmig oder kegelstumpfartig geformt, sodass von oben einfallendes Licht weniger abgeschattet wird, als wenn die Verankerung eine zylindrische Form aufweisen würde.

Erfindungsgemäß ist die Verankerung als flächige Struktur quer zur Längsachse des Haltebolzens oder winklig ungleich 90 ° zur Längsachse des Haltebolzens angeordnet und in Längsrichtung des Haltebolzen geschlossen oder teilweise unterbrochen ausgebildet.

In einer ersten Variante der Erfindung ist vorgesehen, dass der Haltebolzen eine Verankerung aufweist und über die Verankerung mit einer verdrehungshemmenden Form derart im Teller befestigt ist, dass der Haltebolzen aufgrund der Verankerung verdrehsicher im Teller angeordnet ist. Gemäß der ersten Variante ist des Weiteren vorgesehen, die flächige Verankerung an einer dem Bolzenabschnitt zu oder abgewandten Seite oder an beiden Seiten mindestens mit einem daraus vorstehenden quer zur Längsachse des Haltebolzens verlaufenden Steg auszustatten, der eine Verdrehsicherung der Verankerung im Teller bildet. Da das Material des Tellers einen derartig in Längsrichtung des Haltebolzens vorstehenden Steg umschließt, bildet sich ein Hinterschnitt in Drehrichtung um die Längsachse des Haltebolzens heraus. Auf diese Weise wird der Haltebolzen stabilisiert, wenn man eine Mutter oder ein ähnliches Element auf ein Gewinde des Haltebolzens aufschrauben sollte. In diesem Zusammenhang besteht eine bevorzugte Ausführungsform darin, die flächige Verankerung rund auszubilden und an der dem Bolzenabschnitt abgewandten Seite der Verankerung eine Mehrzahl von Stegen in radialer Richtung der Verankerung verlaufend anzuordnen.

Gemäß einer weiteren Ausgestaltung vorliegender Erfindung umfasst die Verankerung eine Verprägung, die eine Verdrehsicherung und eine Auszugssicherung bereitstellt.

Der Teller des Verbindungselements umfasst eine Deckfläche angrenzend an den Haltebolzen und eine Befestigungsfläche zum Aufsetzen auf der Bauteiloberfläche. Zur Unterstützung des Lichteinfalls sowie des Lichttransports zum lichtaktivierbaren Klebstoff an der Befestigungsfläche des Tellers ist die Deckfläche des Tellers mit einer Oberflächenrauheit zur Streuung einfallenden Lichts ausgestattet. Diese Oberflächenrauheit gewährleistet, dass eingestrahltes Licht zur Aushärtung oder Aktivierung des Klebstoffs nicht reflektiert wird. Zudem wird durch diese Oberflächenrauheit das Licht in den Teller des Verbindungselements eingeleitet, sodass innerhalb des Tellers aus durchstrahlbarem Material das eingestrahlte Licht weiter zur Befestigungsfläche und damit zum Klebstoff geleitet werden kann.

Es ist des Weiteren bevorzugt, dass die Deck- und Befestigungsfläche des Tellers über eine umlaufende Verbindungsfläche miteinander verbunden sind, die zumindest teilweise konkav ausgebildet ist.

Es wurde festgestellt, dass gerade die konkave Formgebung ebenfalls zu einer Unterstützung der Weiterleitung des einfallenden Lichts zum Klebstoff bzw. zur Befestigungsfläche des Tellers beiträgt.

Gemäß eines nicht zur Erfindung gehörenden Beispiels wird ein Verbindungselement aus einem mit Licht durchstrahlbarem Material zum Aufkleben auf einer Bauteiloberfläche beschrieben, sodass daran ein Teil befestigbar ist, wobei das Verbindungselement die folgenden Merkmale aufweist: einen Haltebolzen mit einem Bolzenabschnitt, an dem das Teil befestigbar ist, und einen Teller, der eine Deckfläche angrenzend an den Haltebolzen und eine Befestigungsfläche zum Aufsetzen auf der Bauteiloberfläche aufweist, wobei die Deckfläche eine Oberflächenrauheit zur Streuung einfallenden Lichts und/oder eine konkav ausgebildete Verbindungsfläche aufweist, die die Deck- und Befestigungsfläche miteinander verbindet.

In diesem Beispiel kann das Verbindungselement aus nur einem Werkstoff hergestellt sein. Dieser Herstellungsweg bringt gewisse Vereinfachungen mit sich, da Haltebolzen und Teller nicht separat miteinander verbunden werden müssen. Zudem ergibt sich die Möglichkeit, in nur einem Ausformschritt das Verbindungselement aus einem beispielsweise mit Licht durchstrahlbarem Kunststoff herzustellen. In gleicher Weise, wie es oben bereits beschrieben worden ist, weist auch bei diesem Verbindungselement die Formgebung des Tellers eine Oberflächenrauheit und eine konkave Randgestaltung auf, sodass das einfallende Licht zur Aktivierung und/oder Aushärtung des Klebstoffs zur Befestigungsfläche des Tellers bzw. zur Klebstoffschicht geleitet wird. Gerade diese Ausgestaltung des Tellers verhindert einen Verlust an Lichtintensität, was eine Verkürzung der Taktzeit beim Befestigen derartiger Verbindungselemente unterstützt.

Vorliegende Erfindung offenbart zudem ein Herstellungsverfahren für ein erfindungsgemäßes Verbindungselement gemäß der ersten Variante, wie es oben beschrieben worden ist, das die folgenden Schritte aufweist: Bereitstellen eines Haltebolzens mit mindestens einem Bolzenabschnitt und einer Verankerung, vorzugsweise aus Metall mittels Kaltschlagen, spanender Herstellungsverfahren, Spritzgießen, Druckguss oder einem anderen Metall-Umformverfahren oder aus Kunststoff, und Anbringen eines Tellers an der Verankerung, sodass der Haltebolzen und der Teller verdreh- und auszugssicher miteinander verbunden sind. Gemäß einer weiteren Ausgestaltung dieses Herstellungsverfahrens wird vor der Herstellung des Tellers die Verankerung in einer Form positioniert und lichtdurchlässiger Kunststoff in die Form gespritzt, sodass eine Deckfläche angrenzend an den Haltebolzen und eine Befestigungsfläche zum Aufsetzen auf der Bauteiloberfläche entsteht, wobei die Deckfläche eine Oberflächenrauheit zur Streuung einfallenden Lichts aufweist und/oder eine konkav ausgebildete Verbindungsfläche, die die Deck- und Befestigungsfläche miteinander verbindet. Sollten Materialien für den Teller verarbeitet werden, die eine Empfindlichkeit für Risswachstum aufgrund von mechanischen Spannungen im Material zeigen, wie bspw. Glycerin, dann ist es bevorzugt, eine Temperaturbehandlung des Verbindungselements zur Relaxation rissfördernder mechanischer Spannungen vorzusehen. Im Rahmen des Herstellungsverfahrens ist es alternativ ebenfalls bevorzugt, die Verankerung des Haltebolzens durch Verprägen oder Rändeln herzustellen, sodass ebenfalls eine Verdrehsicherung und Auszugssicherung des Haltebolzens im eingeformten Zustand im Teller gewährleistet sind.

Vorliegende Erfindung umfasst zudem ein Befestigungsverfahren für das oben beschriebene erfindungsgemäße Verbindungselement gemäß der ersten Variante auf einer Bauteiloberfläche, das die folgenden Schritte aufweist: Aufbringen von Klebstoff auf den Teller des Verbindungselements und/oder die Bauteiloberfläche, Aufsetzen des Verbindungselements auf die Bauteiloberfläche und Belichten des Klebstoffs, wobei einfallendes Licht durch eine Oberflächenrauheit des Tellers zur Bauteiloberfläche gestreut und/oder durch eine konkave Oberflächenform des Tellers zur Bauteiloberfläche umgeleitet wird.

Erfindungsgemäß ist die Verankerung als flächige Struktur quer oder winklig ungleich 90 ° zur Längsachse des Haltebolzens angeordnet und in Längsrichtung des Haltebolzens geschlossen oder teilweise unterbrochen ausgebildet. In dem Teller aus mit Licht durchstrahlbarem Material ist der Haltebolzen über die Verankerung mit einer auszugshemmenden Form derart befestigt, dass der Haltebolzen aufgrund der Verankerung auszugssicher im Teller angeordnet ist.

Nach einer zweiten Variante der Erfindung ist vorgesehen, dass eine Befestigungsfläche des Verbindungselements in einem inneren Bereich aus der Verankerung und in einem äußeren Bereich aus dem mit Licht durchstrahlbaren Material besteht.

Im Vergleich zu dem oben beschriebenen Verbindungselement wird hier die Befestigungsfläche des Verbindungselements durch einen aus Kunststoff bestehenden und mit Licht durchstrahlbaren Flächenabschnitt und aus einem aus einem wärmeleitfähigen Material bestehenden Flächenabschnitt gebildet. Im Speziellen ist der Teller aus transparentem Kunststoff ausgebildet, durch den Licht auf den Klebstoff auf der Befestigungsfläche fallen kann. Die Verankerung bildet den anderen Teil der Befestigungsfläche, sodass Wärme, die beispielsweise über den Haltebolzen und die Verankerung zur Befestigungsfläche geleitet wird, zur Aushärtung des dort befindlichen Klebstoffs beitragen kann. Die Verankerung wird mit dem transparenten Kunststoff an ihrer bolzenzugewandten Seite und an ihrer lateralen Seite umspritzt oder dort von Kunststoff umgeben. Es ist ebenfalls bevorzugt, den Kunststoffteller anzukleben, an der Verankerung zu verrasten bzw. anzuklipsen oder anderweitig zu befestigen. Wird der Klebstoff an der Befestigungsfläche zunächst durch Lichteinstrahlung aktiviert, erfolgt eine erste Fixierung des Verbindungselements im Bereich der Befestigungsfläche, die aus transparentem Kunststoff besteht. Eine nachfolgende Wärmeeinstrahlung beispielsweise durch einen Ofen, eine andere Wärmequelle oder die Umgebungswärme, sorgt dann für eine vollständige Aushärtung des Klebstoffs an der Befestigungsfläche. Es ist ebenfalls bevorzugt, nach dem Belichten des Klebstoffs/Verbindungselements, den Klebstoff durch Zeitablauf und ohne weitere Zufuhr von Energie aushärten zu lassen.

Gemäß einer bevorzugten Ausführungsform weist das Verbindungselement an seiner Befestigungsfläche, vorzugsweise gleichmäßig verteilt, eine Mehrzahl von Auflagepunkten auf, die einen Übergangsbereich zwischen Teller und Verankerung überbrücken. Vorzugsweise werden alternativ die Auflagepunkte nur an der Verankerung oder nur an dem Teller angeordnet. Gemäß einer weiteren bevorzugten Ausführungsform sind die Auflagepunkte an Verankerung und Teller angeordnet. Zusätzlich realisieren diese Auflagepunkte einen gewissen Abstand zwischen Bauteiloberfläche und Befestigungsfläche des Verbindungselements. Dies stellt sicher, dass der zwischen Bauteiloberfläche und Befestigungsfläche des Verbindungselements befindliche Klebstoff nicht vollständig verdrängt wird, wenn das Verbindungselement auf die Bauteiloberfläche aufgesetzt wird. Zu diesem Zweck sind die Auflagepunkte gemäß einer Alternative aus Kunststoff realisiert. Es ist ebenfalls bevorzugt, die Auflagepunkte durch eine Wellenform der Befestigungsfläche, bspw. im Bereich der Verankerung bereitzustellen. Eine weitere Ausführungsform besteht darin, eine Körnung an der Verankerung an der haltebolzenabgewandten Seite vorzusehen, so dass das bei der Körnung verdrängte Material einen ausreichenden Abstand zwischen Befestigungsfläche und Bauteiloberfläche realisiert.

Es ist weiterhin bevorzugt, wenn die Verankerung des Verbindungselements in einem äußeren Randbereich an der dem Haltebolzen abgewandten Seite anzufasen, um die Befestigung der Auflagepunkte und des Tellers zu unterstützen.

Vorliegende Erfindung offenbart zudem ein Befestigungsverfahren für das oben beschriebene Verbindungselement gemäß der zweiten Variante auf einer Bauteiloberfläche, das die folgenden Schritte aufweist: Aufbringen von Klebstoff auf den Teller und die Verankerung des Verbindungselements oder die Bauteiloberfläche, Aufsetzen des Verbindungselements auf die Bauteiloberfläche und Belichten des Klebstoffs, wobei einfallendes Licht durch einen durchstrahlbaren Kunststoff des Tellers eine erste Fixierung des Verbindungselements auf der Bauteiloberfläche erzeugt. Gemäß einer weiteren Ausgestaltung des Befestigungsverfahrens erfolgt ein Zuführen von Wärme über die Verankerung und/oder die Bauteiloberfläche zum Klebstoff, sodass dadurch eine weitere Fixierung des Verbindungselements auf der Bauteiloberfläche realisiert wird. Die hier zuzuführende Wärme ist gemäß einer Alternative prozessgesteuert. Das bedeutet, dass in Abstimmung mit dem unter dem Befestigungselement eingesetzten Klebstoff gezielt eine bestimmte Wärmemenge zur Aushärtung des Klebstoffs eingebracht bzw. zugeführt wird. Gemäß einer weiteren Alternative ist die zugeführte Wärme oder auch Licht nicht prozessgesteuert. Diese zusätzliche Energiezufuhr ergibt sich beispielsweise aus anderen Verarbeitungsverfahren, in denen das Bauteil mit Verbindungselement weiter verarbeitet wird, bspw. ein thermisches Lackierverfahren. Daher ist diese zusätzliche Energiezufuhr nicht auf die herzustellende Klebeverbindung zwischen Bauteil und Verbindungselement abgestimmt. Diese Energiezufuhr unterstützt aber die Realisierung dieser Klebeverbindung. Es ist ebenfalls bevorzugt, nach dem Belichten des Klebstoffs bzw. Verbindungselements, den Klebstoff durch Zeitablauf und ohne weitere Zufuhr von Energie aushärten zu lassen.

Zudem beschreibt vorliegende Erfindung ein Herstellungsverfahren für ein erfindungsgemäßes Verbindungselement gemäß der zweiten Variante, das oben beschrieben worden ist. Dieses Herstellungsverfahren weist die folgenden Schritte auf: Bereitstellen eines Haltebolzens mit einem Bolzenabschnitt und einer Verankerung mittels Kaltschlagen, einem spanenden Herstellungsverfahren oder einem anderen Metallumformverfahren, Anbringen oder Befestigen eines Tellers an der Verankerung, sodass der Haltebolzen und der Teller auszugssicher miteinander verbunden sind und eine Befestigungsfläche des Verbindungselements entsteht, die durch die Verankerung und den Teller gebildet wird.

4. Kurze Beschreibung der begleitenden Zeichnungen

Die vorliegende Erfindung wird unter Bezugnahme auf die begleitende Zeichnung näher erläutert. Es zeigen:

Figur 1 eine schematische Seitenansicht eines mit Licht bestrahlten Verbindungselements auf einer Bauteiloberfläche,

Figur 2 eine schematische Ansicht eines seitlich mit Licht bestrahlten Verbindungselements auf der Bauteiloberfläche,

Figur 3 eine schematische Darstellung eines Beispiels des Verbindungselements und der Effekte bei Lichteinstrahlung,

Figur 4 ein weiteres Beispiel des Verbindungselements,

Figur 5 eine seitliche Schnittdarstellung einer bevorzugten erfindungsgemäßen Ausführungsform des Verbindungselements,

Figur 6 eine seitliche Schnittdarstellung des Verbindungselements aus Figur 5 bei Lichteinstrahlung,

Figur 7 eine perspektivische Ansicht einer bevorzugten erfindungsgemäßen Ausführungsform des Haltebolzens des Verbindungselements,

Figur 8 eine perspektivische Ansicht einer weiteren bevorzugten erfindungsgemäßen Ausführungsform des Haltebolzens,

Figur 9 ein Beispiel der Verankerung des Haltebolzens,

Figur 10 eine weiteres Beispiel der Verankerung des Haltebolzens,

Figur 11 ein Flussdiagramm der bevorzugten erfindungsgemäßen Ausführungsform des Herstellungsverfahrens für ein Verbindungselement,

Figur 12 ein Flussdiagramm einer bevorzugten erfindungsgemäßen Ausführungsform des Befestigungsverfahrens für das Verbindungselement,

Figur 13 eine seitliche Ansicht eines weiteren Beispiels des Verbindungselements 1,

Figur 14 eine vergrößerte Darstellung des eingekreisten Bereichs A aus Figur 13 und

Figur 15 eine perspektivische Ansicht des Verbindungselements aus Figur 13.

Figur 16 eine weitere bevorzugte erfindungsgemäße Ausführungsform des Verbindungselements in einer perspektivischen Seitenansicht,

Figur 17 eine Draufsicht von unten auf das Verbindungselement der Figur 16,

Figur 18 eine seitliche Schnittansicht des Verbindungselements aus Figur 16,

Figur 19A    eine Ausschnittsvergrößerung aus dem eingekreisten Bereich in Figur 18,

Figur 19B    eine weitere Ausgestaltung des Verbindungselements in dem eingekreisten Bereich in Figur 18,

Figur 20    eine seitliche Schnittansicht einer weiteren erfindungsgemäßen Ausführungsform des Verbindungselements und

Figur 21    ein Flussdiagramm einer bevorzugten erfindungsgemäßen Ausführungsform eines Befestigungsverfahrens für das Verbindungselement gemäß Figur 16.

## 5. Detaillierte Beschreibung bevorzugter Ausführungsformen

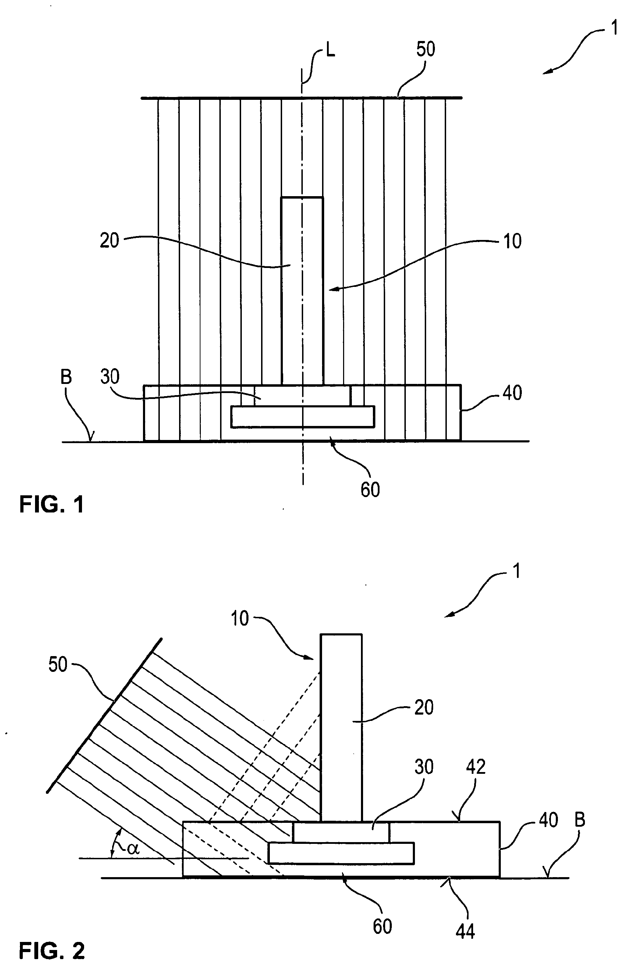

Das Verbindungselement 1 zum Aufkleben auf einer Bauteiloberfläche B besitzt im Querschnitt gesehen eine T-förmige Struktur, wie sie in den Figuren 1-6 zu erkennen ist. Diese T-förmige Struktur umfasst einen Teller 40 mit einer Befestigungsfläche 44 und einer Deckfläche 42. Am Teller 40 ist ein Haltebolzen 10 befestigt. Der Haltebolzen 10 dient mit einem Bolzenabschnitt 20 der Befestigung eines Strukturbauteils oder eines Anbauteils, wie beispielsweise einer Verkleidung oder eines Kotflügels eines Kraftfahrzeugs, an der Bauteiloberfläche B. Die Befestigungsfläche 44 des Tellers 40 ist der Bauteiloberfläche B zugewandt und wird mithilfe von Klebstoff mit der Bauteiloberfläche B verbunden.

Während Schmelzkleber oder allgemein wärmeaushärtender/wärmeaktivierbarer Klebstoff verbreitet ist, wird das erfindungsgemäße Verbindungselement 1 bevorzugt mit Licht aushärtendem oder mit Licht aktivierbarem Klebstoff befestigt. Zu diesem Zweck besteht der Teller 40 oder das gesamte Verbindungselement aus einem transparenten Werkstoff, der für den zur Aushärtung/Aktivierung des Klebstoffs erforderlichen Wellenlängenbereich des Lichts durchlässig ist. Es ist bevorzugt, als transparenten Werkstoff Polycarbonat für den Teller 40 oder das gesamte Element einzusetzen. Es ist weiterhin bevorzugt, alle amorphen transparenten Kunststoffe für den Teller 40 oder das gesamte Verbindungselement 1 einzusetzen.

Es ist des Weiteren bevorzugt, den transparenten Teller 40 in Kombination mit einem Haltebolzen 10 aus nicht transparentem Material herzustellen, wie beispielsweise aus Metall (Stahl) oder Kunststoff. Auch sind für den Teller 40 und den Haltebolzen 10 oder nur für eines dieser beiden Teile Glas oder keramische Werkstoffe geeignet, die sich aufgrund ihrer mechanischen Stabilität, Korrosionsbeständigkeit sowie ihrer elektrischen Eigenschaften als Verbindungselement 1 eignen. Vorzugsweise ist der Haltebolzen 10 aus Metall mit einem Korrosionsschutz und, wenn erforderlich, mit einer Gleitbeschichtung oder Schraubensicherung hergestellt.

Der Bolzenabschnitt 20 des Haltebolzens 10 umfasst eine geeignete Befestigungsstruktur. Diese Befestigungsstruktur ist beispielsweise als Stahlbolzen, Mutternkörper, Kugelbolzen, Gewinde, Steck-, Klemm- oder Schnappverbindung oder dergleichen ausgebildet. Diese unterschiedlichen Konstruktionsmerkmale lassen sich auch in einem Haltebolzen 10 realisieren, der aus dem gleichen Material wie der Teller 40 oder aus einem anderen Material als der Teller 40 hergestellt ist.

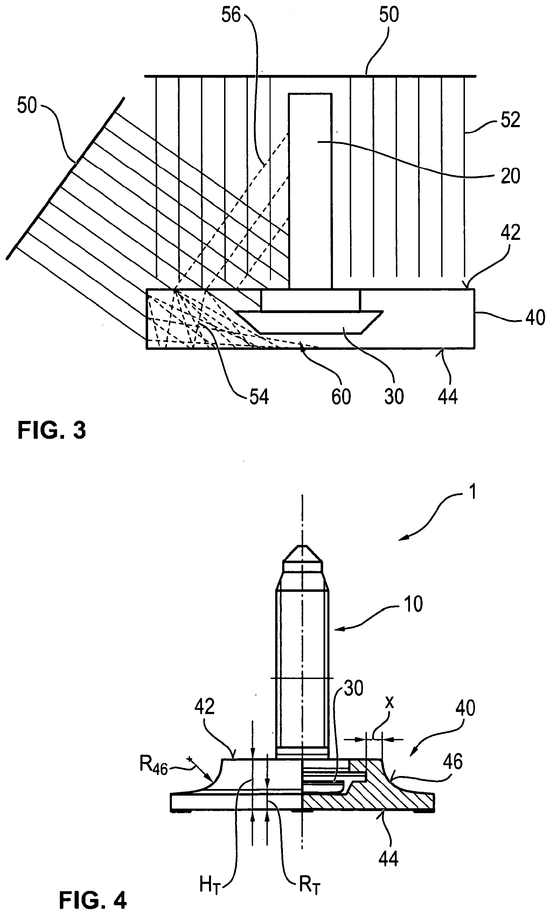

Das Verbindungselement 1 umfasst gemäß den dargestellten bevorzugten Ausführungsformen der Figuren 1-6 den transparenten Teller 40 und den nicht-transparenten Haltebolzen 10. Bei bevorzugter Nutzung von durch Licht aushärtendem/aktivierbarem Klebstoff erzeugt der nicht-transparente Haltebolzen 10 bei der Belichtung des Klebstoffs mit der Lichtquelle 50 Schatten 60 an der Befestigungsfläche 44. Diese Schattenbildung fällt unterschiedlich aus in Abhängigkeit von einer senkrechten Belichtung gemäß Figur 1, einer seitlichen Belichtung gemäß Figur 2 oder einer kombinierten senkrechten und seitlichen Belichtung gemäß Figur 3. Das einfallende Licht 52 der Lichtquelle 50 ist jeweils durch durchgezogene Linien schematisch dargestellt. In den Teller 40 eindringendes Licht 54 sowie am Teller 40 reflektiertes Licht 56 ist gestrichelt dargestellt. Die stattfindende Schattenbildung 60 bei der Belichtung des Verbindungselements 1 führt zu einer inhomogenen Belichtung der Befestigungsfläche 44 gerade im Bereich zwischen der Befestigungsfläche 44 und einer Verankerung 30 des Haltebolzens 10.

Wie bereits oben angedeutet, durchdringt ein Teil des einfallenden Lichts 52 den transparenten Teller 40. Ein anderer Teil des einfallenden Lichts 52 wird an der Deckfläche 42 des Tellers 40 reflektiert und in das Innere des Tellers gestreut. Die bevorzugte Ausgestaltung des Tellers 40 und der Verankerung 30 des Haltebolzens 10 sorgt für die größtmögliche Lichtintensität an der Befestigungsfläche 44 des Tellers 40, an der sich der Klebstoff befindet. Zunächst reduziert eine bestimmte Oberflächengestaltung des Tellers 40 den Anteil an reflektiertem Licht 56 zugunsten des in den Teller 40 eindringen Lichts 54. Dies ist gerade bei der bevorzugten seitlichen Einstrahlung von Licht der Fall. Seitliche Einstrahlung von Licht bedeutet in diesem Zusammenhang, dass das Licht in einem Winkel < 90° zur Befestigungsfläche 44 auf das Verbindungselement 1 eingestrahlt wird.

Bei der Herstellung des Tellers 40 wird als Oberflächengestaltung eine bestimmte Oberflächenrauheit an der Deckfläche 42 und/oder einer Verbindungsfläche 46 erzeugt. Der Mittenrauwert für die Deckfläche 42 und/oder die Verbindungsfläche 46 liegt vorzugsweise im Bereich von 0,18 $\mu$m bis 31,5 $\mu$m und weiter bevorzugt in einem Bereich von 0,18 $\mu$m bis 10 $\mu$m.

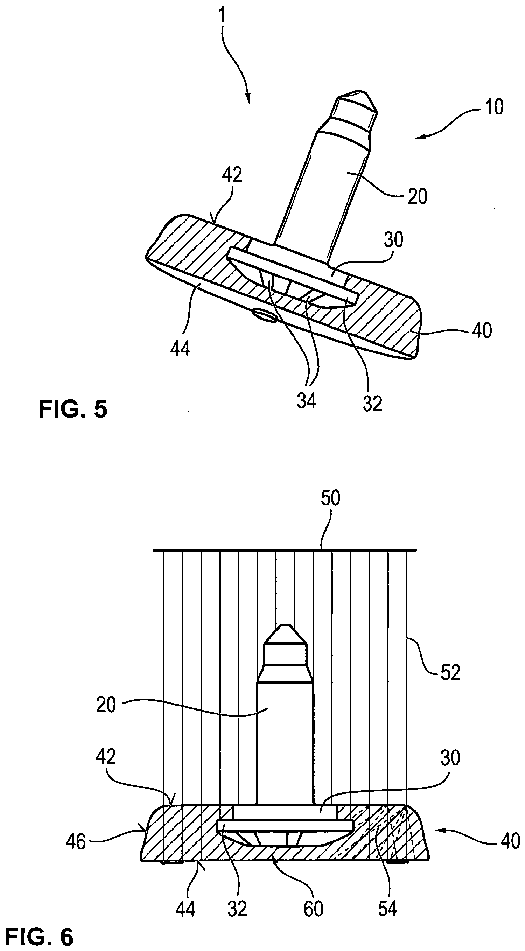

Die Oberflächenrauheit verringert die Reflektion des einfallenden Lichts 52, sodass ein höherer Anteil des eingestrahlten Lichts 52 in den transparenten Teller 40 eindringt und dadurch zur Befestigungsfläche 44 weitergeleitet wird. Zudem wird das einfallende Licht 56 stärker in den Teller 40 gestreut als es bei einer glatten Deck- 42 und Verbindungsfläche 46 der Fall wäre. Der dadurch gesteigerte Anteil an gestreutem Licht 54 im Teller 40 ist in den Figuren 3 und 6 gestrichelt dargestellt. Auf diese Grundlage gelangt eine höhere Lichtintensität zur Befestigungsfläche 44, als es bei einer glatten Deck- 42 und Verbindungsfläche 46 der Fall wäre. Dies hat eine schnellere Aushärtung des Klebstoffs an der Befestigungsfläche 44 und somit eine Verkürzung der Taktzeit beim Befestigen der Verbindungselemente 1 auf der Bauteiloberfläche B zur Folge.

Zur Erhöhung der Lichtintensität an der Befestigungsfläche 44 ist es ebenfalls bevorzugt, die Verbindungsfläche 46 konkav zu formen, wie es in Figur 4 schematisch gezeigt ist. Die Verbindungsfläche 46 verbindet umlaufend die Deckfläche 42 und die Befestigungsfläche 44, wobei der Teller 40 bevorzugt rund ausgebildet ist. Der Teller 40 kann ebenfalls viereckig oder polygonal geformt sein.

Durch die konkave Form der Verbindungsfläche 46 entsteht ein Linseneffekt, der das einfallende Licht 52, bevorzugt das seitlich einfallende Licht, in Richtung auf die Befestigungsfläche 44 bündelt. In Abstimmung mit dem Einfallswinkel des einfallenden Lichts 52 wird bevorzugt der Krümmungsradius $R_{46}$ der konkaven Verbindungsfläche 46 angepasst. Die konkave Verbindungsfläche 46 ist zu diesem Zweck seitlich neben dem abgeschatteten Bereich 60 der Befestigungsfläche 44 anzuordnen. Der seitliche Abstand zwischen abgeschattetem Bereich 60 und Verbindungsfläche 46 wird durch die Materialstärke x bestimmt (vgl. Fig. 4). Die Materialstärke x muss mindestens so groß sein, dass die Verankerung 30 und somit der Haltebolzen 10 verlässlich im Teller 40 gehalten wird.

Zur Konzentration des Lichteinfalls durch die Verbindungsfläche 46 auf der Befestigungsfläche 44, um den Klebstoff effektiv aushärten zu können, ist der Radius $R_{46}$ derart eingestellt, dass das Licht über alle Einfallswinkel erfasst wird und zur Befestigungsfläche 44 weitergeleitet wird. Zu diesem Zweck nimmt der Radius $R_{46}$ Werte an, die sich aus einer Gesamthöhe $H_T$ des Tellers 40 und einer Restwandstärke $R_T$ berechnen (siehe Fig. 4). Gemäß einer bevorzugten Ausführungsform nimmt der Radius $R_{46}$ Werte in folgendem Bereich an:

$$0{,}6 \cdot \left(H_T - R_T\right) \le R_{46} \le 1{,}4 \cdot \left(H_T - R_T\right).$$

Gemäß einer weiteren bevorzugten Ausführungsform nimmt der Radius $R_{46}$ Werte in folgendem Bereich an:

$$0{,}8 \cdot \left(H_T - R_T\right) \le R_{46} \le 1{,}2 \cdot \left(H_T - R_T\right).$$

Zur Unterstützung des Lichteinfalls auf der Befestigungsfläche 44 ist zudem die Verankerung 30 mit einer bestimmten Form versehen. Zunächst weist die Verankerung 30 einen größeren Querschnitt als der Bolzenabschnitt 20 auf, wie es in den Figuren 1-8 zu erkennen ist. Auf diese Weise bildet die in den Teller 40 eingeformte Verankerung einen Hinterschnitt bezogen auf die Längsachse L des Haltebolzens 10. Dieser Hinterschnitt wirkt auszugshemmend und stabilisiert damit die Verbindung zwischen Teller 40 und Haltebolzen 10.

Bevorzugt ist dieser auszugshemmende Hinterschnitt ein- oder mehrstufig ausgebildet, das heißt unterschiedlich stark aufgeweitete Teilbereiche der Verankerung 30 sind in Längsrichtung L des Haltebolzens 10 aneinander gereiht, wie es in den Figuren 1-7 gezeigt ist.

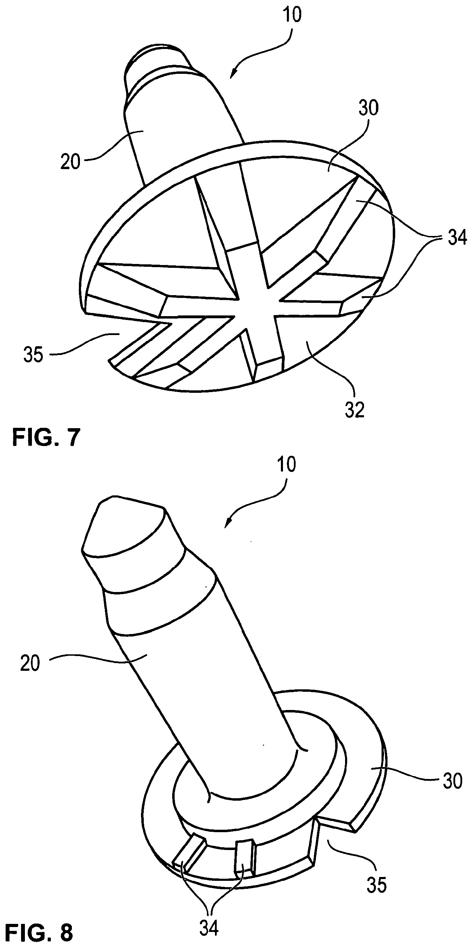

Die Verankerung 30 bildet eine flächige Struktur gesehen in Längsrichtung L des Haltebolzens 10. Gemäß einer Ausführungsform vorliegender Erfindung ist diese flächige Struktur geschlossen ausgebildet. In einer weiteren Ausführungsform vorliegender Erfindung ist die flächige Struktur teilweise durchbrochen, wie es in den Figuren 7 und 8 dargestellt ist. Der mindestens eine Durchbruch 35 verringert die Abschattung bzw. den abgeschatteten Bereich 60 unterhalb der Verankerung 30 auf der Befestigungsfläche 44 und unterstützt somit den Lichteinfall auf die Befestigungsfläche 44.

Des Weiteren ist die Verankerung 30 gesehen in Längsrichtung L des Haltebolzens 10 in einem Teilbereich bevorzugt kegelstumpfartig geformt. Dieser kegelstumpfartige Teilbereich der Verankerung 30 verjüngt sich in Richtung der Befestigungsfläche 44, wodurch wiederum eine Abschattung der Befestigungsfläche 44 verringert wird (vgl. Figur 6).

Gemäß einer Ausgestaltung vorliegender Erfindung nach einer ersten Variante umfasst die flächige Verankerung 30 an einer dem Bolzenabschnitt 20 zu oder abgewandten Seite oder an beiden Seiten mindestens einen daraus vorstehenden quer zu Längsachse L des Haltebolzens 10 verlaufenden Steg 34. So zeigt Figur 7 eine bevorzugte Ausführungsform, in der in die kegelstumpfartig geformte Verankerung 30 radial verlaufende Stege 34 eingeprägt sind. Die Flächen zwischen den Stegen 34 sind geschlossen oder mittels Durchbrüchen 35 offen. Es ist ebenfalls bevorzugt, quer zur Längsachse L verlaufende Stege 34 in Richtung des Befestigungsabschnitts 20 vorstehend vorzusehen, wie es in Figur 8 veranschaulicht ist. Sollte der Teller 40 eine unrunde Form aufweisen, können die Stege 34 auch in nicht radialer Ausrichtung aber senkrecht zur Längsachse L verlaufen. Die Stege 34 sind im eingeformten Zustand vom Material des Tellers 40 umschlossen. Dadurch wirken sie verdrehungshemmend und stabilisieren die Verbindung zwischen dem Teller 40 und dem Haltebolzen 10.

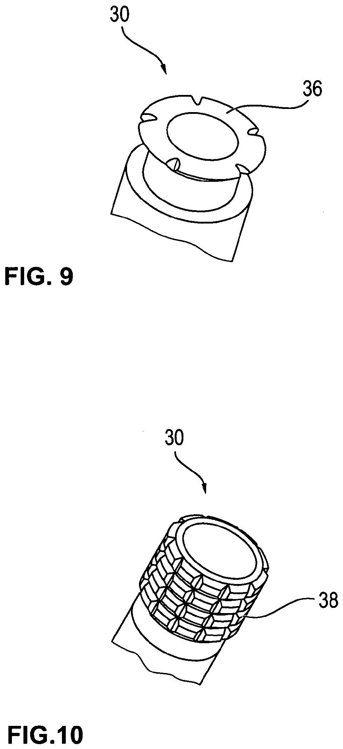

Gemäß einer weiteren bevorzugten Ausgestaltung ist die Verankerung 30 in Form einer Verprägung 36 (vgl. Figur 9) oder einer Rändelung 38 (vgl. 10) ausgebildet. Die Verprägung 36 und die Rändelung 38 eignen sich beispielsweise, wenn der Haltebolzen 10 aus einem Hohlprofil besteht. Sowohl die Rändelung 38 wie auch die Verprägung 36 stellen eine Verdreh- und Auszugssicherung des Haltebolzens 10 aus dem Teller 40 bereit, wenn sie in diesen eingeformt sind. Zudem sorgen Rändelung 38 und Verprägung 36 für eine geringe Abschattung der Befestigungsfläche 44, sodass der Lichteinfall unterstützt wird.

In einer nicht erfindungsgemäßen Ausführungsform ist vorgesehen, das Verbindungselement 1 einteilig aus einem mit Licht durchstrahlbarem Material zum Aufkleben auf der Bauteiloberfläche B herzustellen. Auf dieser Grundlage werden der Haltebolzen 10 mit dem Bolzenabschnitt 20 sowie der Teller 40 gemeinsam ausgeformt. Der Teller 40 weist zudem die Deckfläche 42 angrenzend an den Haltebolzen 10 sowie die Befestigungsfläche 44 zum Aufsetzen auf der Bauteiloberfläche B auf. Die Deckfläche 42 ist mit der oben beschriebenen Oberflächenrauhigkeit zur Streuung des einfallenden Lichts und/oder der konkav ausgebildeten Verbindungsfläche 46 ausgestattet, die die Deck- 42 und Befestigungsfläche 44 miteinander verbindet.

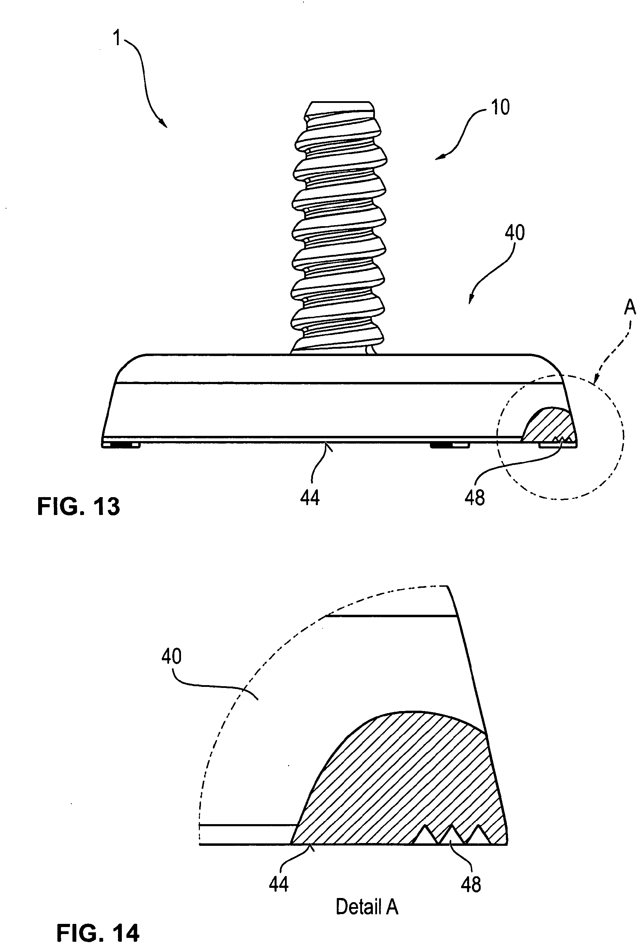

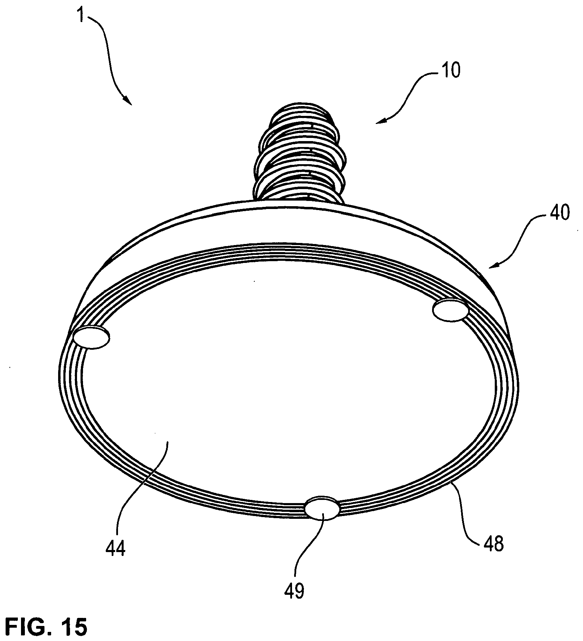

Eine weitere bevorzugte Ausgestaltung des Tellers 40 des Verbindungselements 1 ist in den Figuren 13 bis 15 näher dargestellt. In der perspektivischen Ansicht der Fig. 15 ist die Befestigungsfläche 44 des Verbindungselements 1 gezeigt. Es ist bevorzugt, die im folgenden beschriebene Konstruktion der Befestigungsfläche 44 in Kombination mit allen bereits oben beschriebenen Ausführungsformen des Verbindungselements 1 einzusetzen.

Die Befestigungsfläche 44 umfasst eine umlaufend angeordnete Mehrzahl von Vertiefungen oder Rillen 48, die in größerem Detail in der Ausschnittsvergrößerung der Fig. 14 dargestellt ist. Die Querschnittsform der Vertiefungen 48 ist eckig oder krummlinig ausgestaltet. Die Mehrzahl der Vertiefungen 48 ist angrenzend an den radial äußeren Rand der Befestigungsfläche 44 angeordnet. Es ist ebenfalls bevorzugt, mehrere Gruppen von umlaufenden Vertiefungen 48 auf der Befestigungsfläche 44 anzuordnen, die in radialer Richtung zueinander beabstandet sind. Während eine Mehrzahl von Vertiefungen 48 gezeigt ist, werden gemäß einer bevorzugten Ausführungsform nur eine Vertiefung 48 oder mehrere radial beabstandete einzelne Vertiefungen 48 an der Befestigungsfläche 44 eingesetzt.

Die Vertiefungen 48 dienen der Verankerung des Klebstoffs (nicht gezeigt) im ausgehärteten Zustand an der Befestigungsfläche 44. Zudem wird ein möglicherweise wachsender Riss, der zum Ablösen des Verbindungselements 1 von der Bauteiloberfläche B führen könnte, durch die Vertiefung 48 abgelenkt und/oder aufgehalten. Dadurch erhöht sich die Lebensdauer der Verbindung zwischen Bauteiloberfläche B und Verbindungselement 1.

Des Weiteren sind an der Befestigungsfläche 44 vorzugsweise mindestens drei in axialer Richtung aus der Befestigungsfläche 44 vorstehende Auflagepunkte 49 vorgesehen. Diese Auflagepunkte 49 gewährleisten einen Mindestabstand zwischen der Befestigungsfläche 44 und der Bauteiloberfläche B, so dass an keiner Stelle der Befestigungsfläche 44 der Klebstoff vollständig aus dem Zwischenraum zwischen Befestigungsfläche 44 und Bauteiloberfläche B herausgequetscht werden kann. Es ist ebenfalls bevorzugt, vier, fünf oder sechs Auflagepunkte 49 vorzusehen, die unregelmäßig oder regelmäßig beabstandet an der Befestigungsfläche angeordnet sind. Auch auf diese Weise wird eine hohe Lebensdauer der Verbindung zwischen Verbindungselement 1 und Bauteiloberfläche B unterstützt.

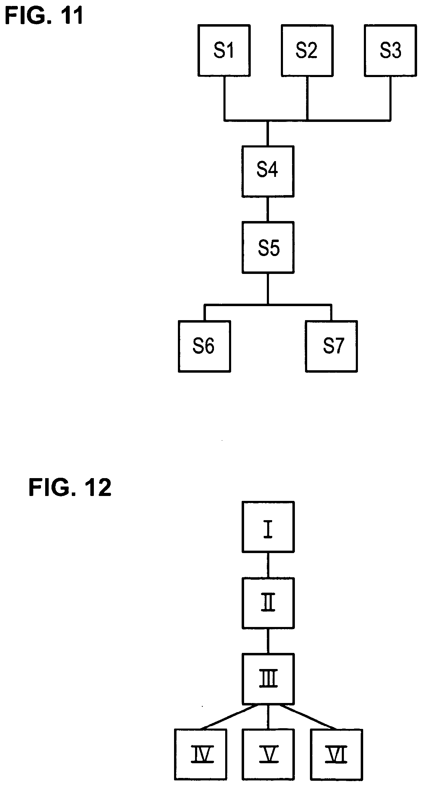

Das oben beschriebene Verbindungselement 1, wie es beispielsweise in den Figuren 5 und 6 dargestellt ist, wird mithilfe des bevorzugten Herstellungsverfahrens gemäß dem Flussdiagramm in Figur 11 hergestellt. Im Rahmen dieses bevorzugten Herstellungsverfahrens wird zunächst der Haltebolzen 10 hergestellt. Gemäß unterschiedlicher bevorzugter Verfahren zur Herstellung des Haltebolzens 10 erfolgt ein Kaltschlagen im Schritt S1 oder ein Verprägen eines Haltebolzens 10 zur Erzeugung der Verankerung 30 im Schritt S2 oder ein Rändeln zur Erzeugung der Verankerung 30 des Haltebolzens im Schritt S3. Es ist ebenfalls denkbar, andere Metall-Umformverfahren zur Herstellung des Haltebolzens 10 mit Bolzenabschnitt 20 zu nutzen, wie beispielsweise Spritzgießen oder Druckguss. Gemäß einer weiteren Verfahrensalternative wird der Haltebolzen mit Verankerung aus Kunststoff hergestellt bspw. durch Spritzgießen oder ein anderes Kunststoffformungsverfahren.

Nachdem der Haltebolzen 10 hergestellt worden ist, wird er zur Herstellung und zum Anbringen des Tellers 40 mit seiner Verankerung 30 in einer Form zur Kunststoffformung positioniert. Der lichtdurchlässige Kunststoff zur Erzeugung des Tellers 40 wird nachfolgend in die Form eingebracht, vorzugsweise gespritzt, um die Verankerung 30 des Haltebolzens 10 mit dem Kunststoff des Tellers 40 zu umschließen. Das Positionieren des Haltebolzens 10 in der Form findet im Schritt S4 statt, während das Erzeugen des Tellers 40 in der Form im Schritt S5 durchgeführt wird.

Während der Ausformung des Kunststoffs in der Form wird die Deckfläche 42 angrenzend an den Haltebolzen 10 und die Befestigungsfläche 44 zum Aufsetzen auf der Bauteiloberfläche B erzeugt.

Gemäß einer weiteren bevorzugten Ausgestaltung des Herstellungsverfahrens wird während des Ausformens des Tellers 40 in der Form eine Oberflächenrauhigkeit auf der Deckfläche 42 und/oder der Verbindungsfläche 46 zur Streuung einfallenden Lichts 52 im Schritt S6 erzeugt. Es ist ebenfalls bevorzugt, die Verbindungsfläche 46 zwischen Deckfläche 42 und Befestigungsfläche 44 im Herstellungsschritt S7 konkav zu formen, sodass sich der oben beschriebene Bündelungseffekt für das einfallende Licht 52 ergibt.

Vorliegende Erfindung umfasst zudem ein Befestigungsverfahren für das oben beschriebene Verbindungselement 1, das bevorzugt gemäß dem Flussdiagramm in Figur 12 abläuft. In einem ersten Schritt I wird lichtaushärtender Klebstoff auf die Befestigungsfläche 44 des Tellers 40 des Verbindungselements 1 und/oder auf die Bauteiloberfläche aufgebracht. Danach erfolgt im Schritt II das Aufsetzen des Verbindungselements 1 auf der Bauteiloberfläche B. Im Schritt III wird der Klebstoff mit der Lichtquelle 50 belichtet, sodass er aushärtet und das Verbindungselement über die Befestigungsfläche 44 an der Bauteiloberfläche B befestigt. Im Rahmen der Belichtung des Klebstoffs im Schritt III wird vorzugsweise einfallendes Licht 52 in Längsrichtung L des Haltebolzens durch die Lichtquelle 50 eingestrahlt und/oder Licht über die Lichtquelle 50 in einem Winkel < 90° bezogen auf die Befestigungsfläche 44 auf das Verbindungselement 1 eingestrahlt. Der Einfallswinkel des seitlich einfallenden Lichts 52 wird bevorzugt derart eingestellt, dass eine Reflektion des einfallenden Licht 52 an der Deckfläche 42 des Tellers 40 minimiert ist. Es ist des Weiteren bevorzugt, im Rahmen des Belichtungsschritts III das einfallende Licht 52 an der Deckfläche 42 und/oder Verbindungsfläche 46 durch die dortige Oberflächenrauheit zu streuen, um dadurch den größtmöglichen Lichtanteil des einfallenden Lichts zur Befestigungsfläche 44 durch den Teller 40 hindurchleiten zu können (Schritt V). In weiterer Ausgestaltung des Belichtungsschritts III findet bevorzugt eine Konzentration/Bündelung des einfallenden Lichts 52 an der konkav geformten Verbindungsfläche 46 statt (Schritt VI), um die Lichtintensität an der Befestigungsfläche 44 zu optimieren. Sollte kein seitliches Einstrahlen von Licht erfolgen oder zusätzlich dazu, wird seitlich abgeleitetes Licht, wie beispielsweise Streulicht, in Richtung Verbindungselement 1 wieder eingespiegelt oder reflektiert. Dadurch werden der Lichteintrag in das Verbindungselement 1 erhöht und Lichtverluste der Lichtquelle 50 reduziert.

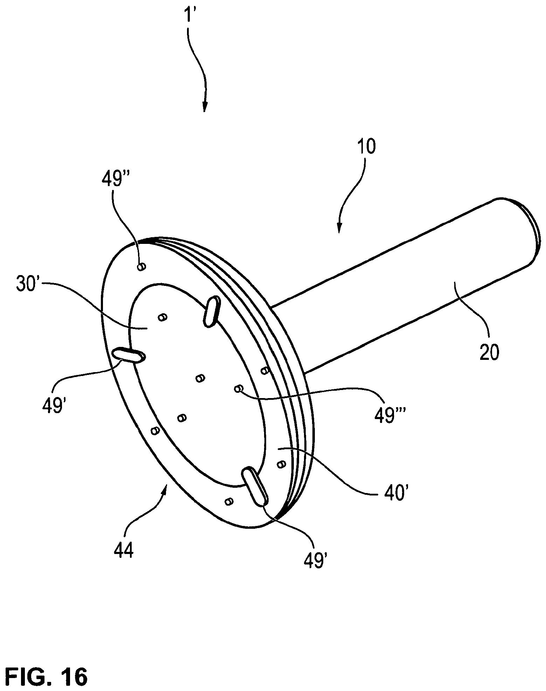

Figur 16 zeigt eine Ausführungsform nach einer zweiten Variante eines erfindungsgemäßen Verbindungselements 1'. Im Vergleich zu dem oben beschriebenen Verbindungselement 1 sind gleiche Elemente mit den gleichen Bezugszeichen benannt. Für diese Elemente gelten in gleicher Weise die bereits oben beschriebenen Merkmale.

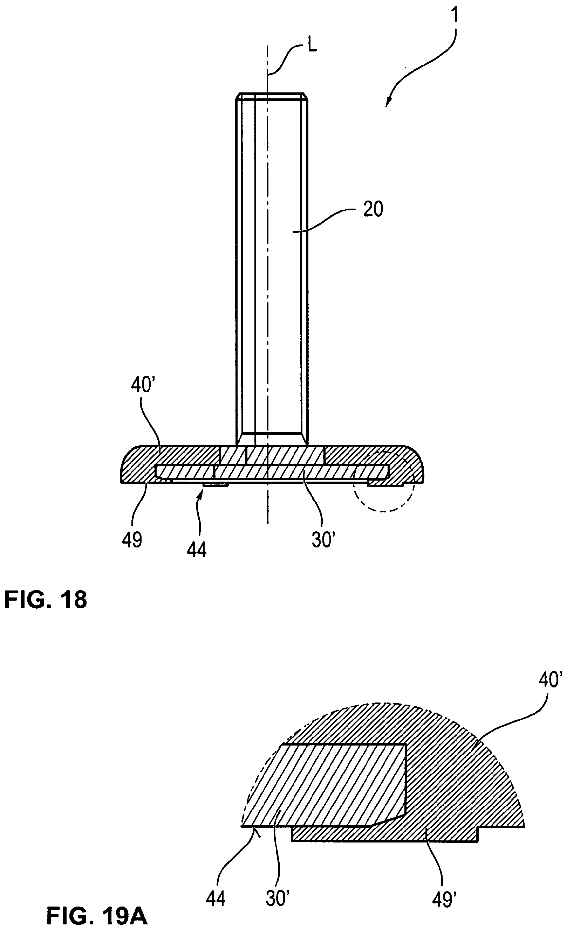

Wie man anhand von Figur 16 erkennen kann, umfasst das Verbindungselement 1' einen Haltebolzen 10 mit einem Bolzenabschnitt 20, der an seinem einen Ende eine Verankerung 30' aufweist. Die Verankerung 30' ist senkrecht oder winklig ungleich 90 ° zur Längsachse L des Haltebolzens 10 flächig ausgebildet, wie in Figur 18 veranschaulicht ist. Vorzugsweise ist die Verankerung 30' an der dem Bolzen zugewandten Seite abgestuft oder gleichmäßig ausgebildet. Die bolzenabgewandte Seite der Verankerung 30' ist gleichmäßig ausgebildet. Sie stellt einen Teil der Befestigungsfläche 44 des Verbindungselements 1' bereit, wie unten näher erläutert ist.

Der Haltebolzen 10 mit Verankerung 30' aus Metall wird mittels Kaltschlagen, einem spanenden Herstellungsverfahren, durch Spritzgießen oder Druckguss oder mit einem anderen Metallumformverfahren hergestellt. Ebenfalls bevorzugt ist die Herstellung aus Kunststoff.

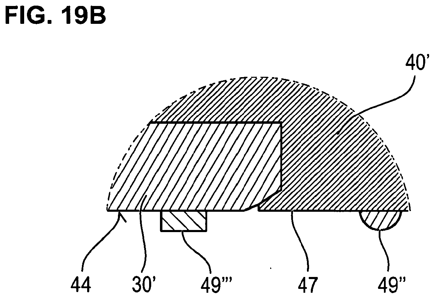

Die Verankerung 30' wird an ihrer bolzenzugewandten Seite und radial umfänglich durch einen transparenten Kunststoff umgeben, der den Teller 40' bildet. Vorzugsweise wird der transparente Kunststoff-Teller 40' an die Verankerung 30' angespritzt oder anderweitig befestigt. Dazu ist es möglich, den vorgefertigten Teller 40' anzukleben, an der Verankerung zu verrasten oder anzuklipsen oder den Teller durch Reibschweißen an der Verankerung 30' festzulegen. Die Figuren 19A und B zeigen entsprechend unterschiedliche Ausgestaltungen der Verbindung zwischen Teller 40' und Verankerung 30'. In Fig. 19A ist der Teller 40' an die Verankerung 30' angespritzt und umgreift den angefasten Randbereich der Verankerung 30'. Dabei wird gleichzeitig der Auflagepunkt 49' ausgeformt.

Alternativ dazu wird der Teller 40' an die Verankerung 30' angeklipst, in dem der Teller 40' den angefasten Randbereich der Verankerung 30' im Bereich 47, vorzugsweise lösbar, umgreift. Zudem sind die optionalen Auflagepunkte 49" und 49'" am Teller 40' und/oder an der Verankerung 30' dargestellt.

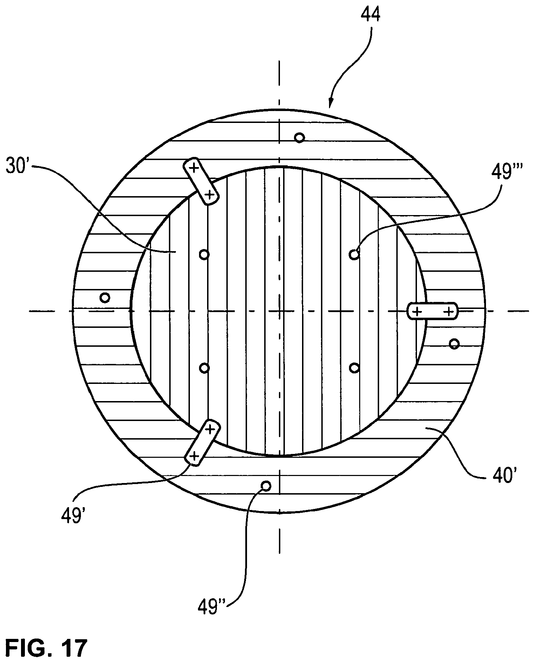

Figur 16 zeigt in einer perspektivischen Ansicht, Figur 17 in einer Draufsicht auf die Befestigungsfläche 44 und Figur 18 in einer seitlichen Schnittansicht des Verbindungselements 1, dass der Kunststoffteller 40' und die Verankerung 30' gemeinsam die Befestigungsfläche 44 bilden. Auf diese Befestigungsfläche 44 oder die Bauteiloberfläche B wird später der Klebstoff aufgetragen, um das Verbindungselement 1' zu befestigen.

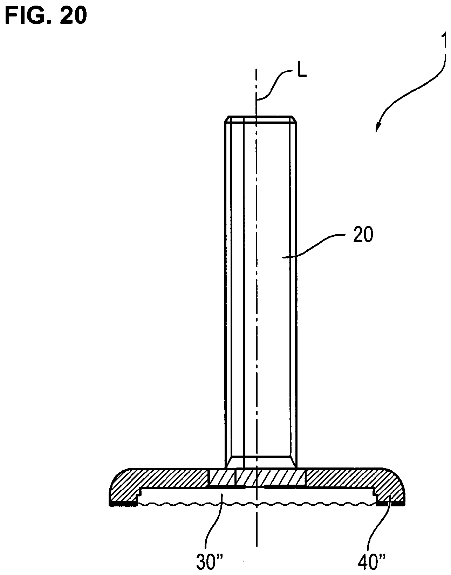

Der Übergangsbereich zwischen Verankerung 30' und Teller 40' wird vorzugsweise durch eine Mehrzahl von Auflagepunkten 49' überbrückt. Die Auflagepunkte 49' stehen senkrecht aus der Befestigungsfläche 44 hervor. Wird das Verbindungselement 1' auf der Bauteiloberfläche B aufgesetzt, definiert der Überstand der Auflagepunkt 49' über die Befestigungsfläche 44 die Dicke der Klebstoffschicht, die zwischen Befestigungsfläche 44 und Bauteiloberfläche B erhalten bleibt, ohne das Klebstoff verdrängt wird. Es ist ebenfalls bevorzugt, die Auflagepunkte unregelmäßig auf der Befestigungsfläche 44' zu verteilen. Gemäß unterschiedlicher Konstruktionsvarianten entstehen die Auflagepunkte 49', 49" durch eine Wellenform der gesamten oder einem Teil der Befestigungsfläche 44. Dies ist in Figur 20 veranschaulicht, wo die Verankerung 30' an ihrer der Bauteiloberfläche B zugewandten Fläche eine Wellenform aufweist. Diese Wellenform ist ebenfalls im Teller 40' realisierbar. Eine weitere Alternative sieht eine Körnung der Verankerung 30' vor, so dass bei der Körnung verdrängtes Material einen Materialaufwurf an der Befestigungsfläche bildet, der für die nötige Beabstandung zur Bauteiloberfläche B sorgt.

Figur 19 zeigt eine vergrößerte Darstellung des eingekreisten Bereichs aus Figur 18. Anhand von Figur 19 ist der Überstand des Auflagepunkt 49' über der Befestigungsfläche 44 zu erkennen. Zudem ist der Teller 40' in einem umfänglichen Bereich der Verankerung 30' angeordnet und geht teilweise in die Auflagepunkte 49' über. Auf diese Art stellen beispielsweise die Auflagepunkte 49' eine Klipsverbindung zwischen Teller 40' und Verankerung 30' her. Die gezeigten Auflagepunkte 49" und 49"' können aber auch außerhalb des Übergangsbereichs am Teller 40' und/oder an der Verankerung 30' vorgesehen sein (vgl. Fig. 16, 17).

In ihrem umfänglichen Bereich ist die Verankerung 30' vorzugsweise an der bolzenabgewandten Seite angefast. Dies gewährleistet, dass eingestrahltes Licht zur Aktivierung des Klebstoffs auch teilweise unter die Verankerung 30' dringen kann, wenn Licht seitlich eingestrahlt-wird. Aufgrund ihrer Form bildet die Verankerung 30' einen Hinterschnitt in axialer Richtung, sodass der Haltebolzen 10 mit Verankerung 30' nicht aus dem Teller 40' gezogen werden kann. Es ist zudem bevorzugt, die Verankerung 30' in Richtung der Längsachse L des Haltebolzens 10 durchbrochen bereitzustellen. Derartige Durchbrüche (nicht gezeigt) können Löcher oder flächige Strukturen bis zum äußeren Rand der Verankerung 30' sein. Auf diese Weise ist zusätzlich Licht auf die Befestigungsfläche 44 und den dortigen Klebstoff einstrahlbar. Zudem würde der Kunststoff des Tellers 40' in diese Bereiche eingreifen und eine Verdrehsicherung zwischen Teller 40' und Verankerung 30' bilden.

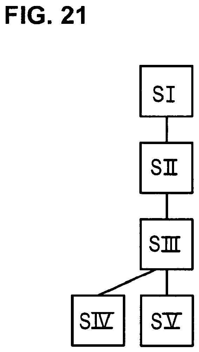

Wie in Figur 17 erkennbar ist, wird die Befestigungsfläche des Verbindungselements 1' aus der bolzenabgewandten Seite der aus Metall bestehenden Verankerung 30' und aus dem umlaufenden Rand des Tellers 40' aus transparentem Kunststoff gebildet. Die jeweils durch den Teller 40' und die Verankerung 30' eingenommenen Flächenanteile der Befestigungsfläche 44 sind gemäß den Anforderungen zur Befestigung des Verbindungselements 1' auf der Bauteiloberfläche B einstellbar. Der Flächenanteil des Tellers 40' an der Befestigungsfläche 44 dient der ersten Fixierung des Verbindungselements an der Bauteiloberfläche B. Dazu wird die Befestigungsfläche 44 mit einem durch Licht aktivierbaren Klebstoff versehen. Nach dem Aufsetzen des Verbindungselements 1' auf der Bauteiloberfläche B wird Licht auf das Verbindungselement 1' eingestrahlt. Da das Licht den transparenten Kunststoff des Tellers 40' durchdringt, härtet der Klebstoff zumindest für eine erste Fixierung im Tellerbereich der Befestigungsfläche 44 aus. Auf diese Weise ist das Verbindungselement 1' erst einmal fixiert, um transportiert, leichter gehandhabt oder anderweitig verarbeitet zu werden. (vgl. Fig. 21)

Nachfolgend wird bevorzugt dem Verbindungselement 1' und somit dem Klebstoff an der Befestigungsfläche 44 Wärme zugeführt, um den Klebstoff vollständig auszuhärten und das Verbindungselement 1' zu fixieren. Die Wärmezufuhr erfolgt durch eine Wärmequelle in der Umgebung, durch Platzieren des Verbindungselements in einem Ofen, durch Leiten des Verbindungselements 1' durch eine gegenüber der Raumtemperatur erwärmte Umgebung oder durch die Umgebungs-/Raumtemperatur selbst. Dabei sorgt der aus Metall bestehende Haltebolzen 10 und die damit verbundene Verankerung 30' für eine gute Wärmeleitung und die Weiterleitung der Wärme zur Befestigungsfläche 44. Das gleiche gilt für die Bauteiloberfläche B, die ebenfalls zugeführte oder in der Umgebung vorhandene Wärme zur Befestigungsfläche 44 weiterleitet, Dort trägt gerade die Verankerung 30' als wärmeabstrahlende Fläche zur Aushärtung des Klebstoffs bei, der mittels Wärme aushärtet und das Verbindungselement 1' auf der Bauteiloberfläche B befestigt.

Es ist ebenfalls bevorzugt, allein durch Zeitablauf den Klebstoff auszuhärten, ohne dass zusätzlich Energie zugeführt wird.

Bezugszeichenliste

| 1, 1' | Verbindungselement |
|---|---|
| 10 | Haltebolzen |
| 20 | Bolzenabschnitt |
| 30, 30' | Verankerung |
| 32 | Aufweitung |
| 34 | Steg |
| 35 | Durchbruch |
| 36 | Verprägung |
| 38 | Rändelung |
| 40, 40' | Teller |
| 42 | Deckfläche |
| 44 | Befestigungsfläche |
| 46 | Verbindungsfläche |
| 48 | Vertiefung |
| 49, 49', 49", 49"' | Auflagepunkt |
| 50 | Lichtquelle |
| 52 | Einfallendes Licht |
| 54 | Gestreutes Licht |
| 56 | Reflektiertes Licht |
| 60 | Abgeschatteter Bereich |

| $H_T$ | Gesamthöhe des Tellers 40 |
|---|---|
| $R_T$ | Restwandstärke des Tellers 40 |
| x | Materialstärke |
| B | Bauteiloberfläche |
| L | Längsachse |

## Patentansprüche

1.  Verbindungselement (1) zum Aufkleben auf einer Bauteiloberfläche (B), sodass daran ein Teil befestigbar ist, das die folgenden Merkmale aufweist:

    a. einen Haltebolzen (10) mit einem Bolzenabschnitt (20), an dem das Teil befestigbar ist, und einer Verankerung (30),
    b. einen Teller (40) aus mit Licht durchstahlbarem Material, in dem der Haltebolzen (10) über die Verankerung (30) mit einer auszugshemmenden Form derart befestigt ist, dass der Haltebolzen (10) aufgrund der Verankerung (30) auszugssicher im Teller (40) angeordnet ist, in dem
    c. die Verankerung (30) als flächige Struktur quer zur Längsachse (L) des Haltebolzens (10) oder winklig ungleich 90 ° zur Längsachse (L) des Haltebolzens (10) angeordnet ist und in Längsrichtung des Haltebolzen (10) geschlossen oder teilweise unterbrochen ausgebildet ist, **dadurch gekennzeichnet, dass**
    d. der Haltebolzen (10) über die Verankerung (30) mit einer verdrehungshemmenden Form derart im Teller (40) befestigt ist, dass der Haltebolzen (10) aufgrund der Verankerung (30) verdrehsicher im Teller (40) angeordnet ist, und dessen flächige Verankerung (30) an einer dem Bolzenabschnitt (20) zu oder abgewandten Seite oder an beiden Seiten mindestens einen daraus vorstehenden quer zur Längsachse des Haltebolzens (10) verlaufenden Steg (34) aufweist, der eine Verdrehsicherung der Verankerung (30) im Teller (40) bildet, oder dass
    e. eine Befestigungsfläche (44) des Verbindungselements (1') in einem inneren Bereich aus der Verankerung (30') und in einem äußeren Bereich aus dem mit Licht durchstrahlbaren Material besteht, wobei der Teller (40) an die Verankerung (30) angespritzt, angeklebt, an der Verankerung (30) verrastet oder angeklipst ist oder der Teller (40) ist durch Reibschweißen an der Verankerung (30) festgelegt.

2.  Verbindungselement (1) gemäß Anspruch 1, in dem die Verankerung (30) den Steg (34) aufweist und in dem die Verankerung (30) bezogen auf die Längsachse (L) des Haltebolzens (10) einen Hinterschnitt in Form einer lateralen, vorzugsweise radialen, Aufweitung (32) aufweist.

3.  Verbindungselement (1) gemäß Anspruch 1 oder 2, in dem die Verankerung (30) den Steg (34) aufweist und dessen flächige Verankerung (30) rund ausgebildet ist und an deren dem Bolzenabschnitt (20) abgewandten Seite eine Mehrzahl von Stegen (34) in radialer Richtung der Verankerung (30) verläuft.

4.  Verbindungselement (1) gemäß Anspruch 2, in dem die Verankerung (30) eine Verprägung (36) oder eine Rändelung (38) umfasst, die eine Verdrehsicherung und eine Auszugssicherung bereitstellt.

5.  Verbindungselement (1) gemäß Anspruch 1, dessen Teller (40) eine Deckfläche (42) angrenzend an den Haltebolzen (10) und eine Befestigungsfläche (44) zum Aufsetzen auf der Bauteiloberfläche (B) aufweist, wobei die Deckfläche (42) eine Oberflächenrauheit zur Streuung einfallenden Lichts umfasst.

6.  Verbindungselement (1) gemäß Anspruch 5, dessen Deck- (42) und Befestigungsfläche (44) über eine umlaufende Verbindungsfläche (46) verbunden sind, die zumindest teilweise konkav ausgebildet ist.

7.  Herstellungsverfahren für ein Verbindungselement (1) gemäß Anspruch 1, in dem die Verankerung (30) den Steg (34) aufweist, und das die folgenden Schritte aufweist:

    a. Bereitstellen eines Haltebolzens (10) mit mindestens einem Bolzenabschnitt (20) und einer Verankerung(30), vorzugsweise aus Metall mittels Kaltschlagen, einem spanenden Herstellungsverfahren, Spritzgießen, Druckguss oder einem anderen Metall-Umform verfahren oder aus Kunststoff, wobei die Verankerung (30) als flächige Struktur quer zur Längsachse (L) des Haltebolzens (10) oder winklig ungleich 90 ° zur Längsachse (L) des Haltebolzens (10) angeordnet ist und in Längsrichtung des Haltebolzen (10) geschlossen oder teilweise unterbrochen ausgebildet ist und die flächige Verankerung (30) weist an einer dem Bolzenabschnitt (20) zu oder abgewandten Seite oder an beiden Seiten mindestens einen daraus vorstehenden quer zur Längsachse des Haltebolzens (10) verlaufenden Steg (34) auf,

b. Anbringen eines Tellers (40) aus mit Licht durchstrahlbarem Material an der Verankerung (30), sodass der Haltebolzen (10) und der Teller (40) verdreh- und auszugssicher miteinander verbunden sind, wobei der quer zur Längsachse des Haltebolzens (10) verlaufenden Steg (34) eine Verdrehsicherung der Verankerung (30) im Teller (40) bildet.

8. Herstellungsverfahren nach Anspruch 7, wobei zur Herstellung des Tellers (40) die Verankerung (30) in einer Form positioniert wird und ein Licht durchlässiger Kunststoff in die Form gespritzt wird, sodass eine Deckfläche (42) angrenzend an den Haltebolzen (10) und eine Befestigungsfläche (44) zum Aufsetzen auf der Bauteiloberfläche (B) entsteht, wobei die Deckfläche(42) eine Oberflächenrauheit zur Streuung einfallenden Lichts aufweist und/oder eine konkav ausgebildete Verbindungsfläche (46), die Deck- (42) und Befestigungsfläche (44) miteinander verbindet.

9. Herstellungsverfahren nach Anspruch 7 oder 8, Verprägen oder Rändeln des Haltebolzens (10), sodass die Verankerung (30) bereitgestellt wird.

10. Befestigungsverfahren für das Verbindungselement (1) gemäß Anspruch 1, in dem die Verankerung (30) den Steg (34) aufweist, auf einer Bauteiloberfläche (B), das die folgenden Schritte aufweist:

    a. Aufbringen von Klebstoff auf den Teller (40) des Verbindungselements (1) und/oder auf die Bauteiloberfläche (B),
    b. Aufsetzen des Verbindungselements (1) auf die Bauteiloberfläche (B) und
    c. Belichten des Klebstoffs, wobei einfallendes Licht durch eine Oberflächenrauheit des Tellers (40) gestreut und/oder durch eine konkave Oberflächenform des Tellers (40) zur Bauteiloberfläche (B) umgeleitet wird.

11. Verbindungselement (1') gemäß Anspruch 1, 5 oder 6, in dem die Befestigungsfläche (44) in einem inneren Bereich aus der Verankerung (30') und in einem äußeren Bereich aus dem mit Licht durchstrahlbaren Material besteht und dessen Verankerung (30') an der dem Haltebolzen (10) zugewandten Seite und entlang des Umfangs der Verankerung (30') von einer Kunststoffschicht eingeschlossen ist, die den Teller (40') bildet.

12. Verbindungselement (1') gemäß Anspruch 1, 5, 6 oder 11, in dem die Befestigungsfläche (44) in einem inneren Bereich aus der Verankerung (30') und in einem äußeren Bereich aus dem mit Licht durchstrahlbaren Material besteht und das an seiner Befestigungsfläche (44), vorzugsweise gleichmäßig verteilt, eine Mehrzahl von Auflagepunkten (49') aufweist, die einen Übergangsbereich zwischen Teller (40') und Verankerung (30') überbrücken oder an der Verankerung oder/und am Teller angeordnet sind.

13. Verbindungselement (1') gemäß einem der Ansprüche 1, 5, 6 oder 11 bis 12, in dem die Befestigungsfläche (44) in einem inneren Bereich aus der Verankerung (30') und in einem äußeren Bereich aus dem mit Licht durchstrahlbaren Material besteht und dessen Verankerung (30') im äußeren Randbereich an der dem Haltebolzen (10) abgewandten Seite angephast ist, um die Befestigung der Auflagepunkte (49') und/oder des Tellers zu unterstützen.

14. Befestigungsverfahren für das Verbindungselement (1') gemäß einem der Ansprüche 1, 5, 6 oder 11 bis 13, in dem die Befestigungsfläche (44) in einem inneren Bereich aus der Verankerung (30') und in einem äußeren Bereich aus dem mit Licht durchstrahlbaren Material besteht, auf einer Bauteiloberfläche (B), das die folgenden Schritte aufweist:

    Aufbringen von Klebstoff auf den Teller (40') und die Verankerung (30') des Verbindungselements (1') und/oder die Bauteiloberfläche (B),
    Aufsetzen des Verbindungselements (1') auf die Bauteiloberfläche (B), und
    Belichten des Klebstoffs, wobei einfallendes Licht durch einen durchstrahlbaren Kunststoff des Tellers (40') eine erste Fixierung des Verbindungselements (1') auf der Bauteiloberfläche (B) erzeugt.

15. Befestigungsverfahren gemäß Anspruch 14, das den weiteren Schritt aufweist:
    Zuführen von Wärme über die Verankerung (30') und/oder die Bauteiloberfläche (B) zum Klebstoff oder Aushärten des Klebstoffs aufgrund ausreichend langer Aushärtezeit ohne zusätzliche Energiezufuhr, sodass dadurch eine weitere Fixierung des Verbindungselements (1') auf der Bauteiloberfläche (B) erfolgt.

16. Herstellungsverfahren für ein Verbindungselement gemäß einem der Ansprüche 1, 5, 6 oder 11 bis 13, in dem die Befestigungsfläche (44) in einem inneren Bereich aus der Verankerung (30') und in einem äußeren Bereich aus dem mit Licht durchstrahlbaren Material besteht und das die folgenden Schritte aufweist:

Bereitstellen eines Haltebolzens (10) mit mindestens einem Bolzenabschnitt (20) und einer Verankerung (30'), vorzugsweise aus Metall mittels Kaltschlagen, einem spanenden Herstellungsverfahren, Spritzgießen, Druckguss oder einem anderen Metall-Umformverfahren oder aus Kunststoff, wobei die Verankerung (30) als flächige Struktur quer zur Längsachse (L) des Haltebolzens (10) oder winklig ungleich 90 ° zur Längsachse (L) des Haltebolzens (10) angeordnet ist und in Längsrichtung des Haltebolzen (10) geschlossen oder teilweise unterbrochen ausgebildet ist,

Anbringen eines Tellers (40') aus mit Licht durchstrahlbarem Material an die Verankerung (30'), sodass der Haltebolzen (10) und der Teller (40') auszugssicher miteinander verbunden sind und eine Befestigungsfläche (44) des Verbindungselements (1') entsteht, die in einem inneren Bereich aus der Verankerung (30') und in einem äußerem Bereich aus dem mit Licht durchstrahlbaren Material des Tellers (40') besteht.

**Claims**

1. A connecting element (1) for gluing onto a component surface (B), so that a part can be fastened thereto, comprising the following features:

   a. a retaining pin (10) having a pin section (20), to which the part can be fastened, and an anchor (30),
   b. a disk (40) made of material, which can be penetrated by light, in which the retaining pin (10) is fastened via the anchor (30), having a removal-inhibiting shape, such that due to the anchor (30), the retaining pin (10) is arranged in the disk (40) secured against removal, in which
   c. the anchor (30) is arranged as a flat structure transverse to the longitudinal axis (L) of the retaining pin (10) or at an angle not equal to 90° with respect to the longitudinal axis (L) of the retaining pin (10, and is formed closed or interrupted at least to some extent in the longitudinal direction of the retaining pin (10), **characterized in that**
   d. the retaining pin (10) is fastened in the disk (40) via the anchor (30) having a rotation-inhibiting shape such that due to the anchor (30) the retaining pin (10) is arranged in the disk (40) secured against rotation, and its flat anchor (30) comprises on a side facing toward or away from the pin section (20), or on both sides, at least one web (34) projecting therefrom, that extends transversely to the longitudinal axis of the retaining pin (10), and that forms an anti-rotation protection of the anchor (30) in the disk (40), or that
   e. an attachment surface (44) of the connecting element (1') is comprised in an inner portion of the anchor (30) and in an outer portion of the material, which can be penetrated by light, wherein the disk (40) is injection molded, glued, latched or clipped to the anchor (30) or the disk (40) is fixed to the anchor (30) by friction welding.

2. The connecting element (1) according to claim 1, in which the anchor (30) comprises the web (34) and in which the anchor (30) comprises an undercut with respect to the longitudinal axis (L) of the retaining pin (10), in the shape of a lateral, preferably radial enlargement (32).

3. The connecting element (1) according to claim 1 or 2, in which the anchor (30) comprises the web (34) and the flat anchor (30) of which is formed round and at the side thereof facing away from the pin section (20), a plurality of webs (34) extends in the radial direction of the anchor (30).

4. The connecting element (1) according to claim 2, in which the anchor (30) comprises an embossing (36) or a knurling (38) which provides an anti-rotation protection and an anti-removal protection.

5. The connecting element (1) according to claim 1, the disk (40) of which has a top surface (42) adjacent to the retaining pin (10) and an attachment surface (44) for placement on the component surface (B), wherein the top surface (42) has a surface roughness for scattering incident light.

6. The connecting element (1) according to claim 5, the top surface (42) and the attachment surface (44) of which are connected via a continuous connecting surface (46), which is formed concave at least to some extent.

7. A production method for a connecting element (1) according to claim 1, in which the anchor (30) comprises the web (34) and having the following steps:

   a. providing a retaining pin (10) having at least one pin section (20) and an anchor (30) preferably made of metal by means of cold forming, a machining production method, injection molding, pressure casting or another metal forming method, or from plastic, wherein the anchor (30) is arranged as a flat structure transverse to the longitudinal axis (L) of the retaining pin (10) or at an angle not equal to 90° with respect to the longitudinal axis (L) of the retaining pin (10), and is formed closed or interrupted at least to some extent in the longitudinal direction of the retaining pin (10), and the flat anchor (30) comprises on a side facing toward or away from the pin section (20), or on both sides, at least one web (34) projecting therefrom, that extends transversely to the longitudinal axis of the retaining pin (10),

b. attaching a disk (40) made of material, which can be penetrated by light, to the anchor (30) such that the retaining pin (10) and the disk (40) are connected with each other secured against rotation and removal, wherein the web (34) extending transversely to the longitudinal axis of the retaining pin (10) forms an anti-rotation protection of the anchor (30) in the disk (40).

8. The production method according to claim 7, wherein for the production of the disk (40), the anchor (30) is positioned in a mold and a light transmissible plastic is injected into the mold such that a top surface (42) arises adjacent to the retaining pin (10) and an attachment surface (44) arises for placement onto the component surface (B), wherein the top surface (42) has a surface roughness for scattering incident light, and/or a concave shaped connecting surface (46) connecting the top surface (42) and the attachment surface (44) with each other.

9. The production method according to claim 7 or 8, embossing or knurling of the retaining pin (10), such that the anchor (30) is provided.

10. An attachment method for the connecting element (1) according to claim 1, in which the anchor (30) comprises the web (34), on a component surface (B), having the following steps:

a. applying glue onto the disk (40) of the connecting element (1) and/or onto the component surface (B),
b. placing the connecting element (1) onto the component surface (B), and
c. exposing the glue to light, wherein incident light is scattered by a surface roughness of the disk (40) and/or is diverted to the component surface (B) due to a concave surface shape of the disk (40).

11. The connecting element (1') according to claim 1, 5 or 6, in which the attachment surface (44) is comprised in an inner portion of the anchor (30') and in an outer portion of the material, which can be penetrated by light, and the anchor (30') of which is enclosed on the side facing toward the retaining pin (10) and along the circumference of the anchor (30') by a plastic layer, which forms the disk (40').

12. The connecting element (1') according to claim 1, 5, 6 or 11, in which the attachment surface (44) is comprised in an inner portion of the anchor (30') and in an outer portion of the material, which can be penetrated by light, and the connecting element (1') has a plurality of support points (49') at its attachment surface (44), preferably uniformly distributed, which bridge a transition portion between the disk (40') and the anchor (30'), or are arranged on the anchor or/and on the disk.

13. The connecting element (1') according to one of the claims 1, 5, 6 or 11 to 12, in which the attachment surface (44) is comprised in an inner portion of the anchor (30') and in an outer portion of the material, which can be penetrated by light, and the anchor (30') of which is chamfered in the outer edge portion at the side facing away from the retaining pin (10), in order to support the attachment of the support points (49') and/or the disk.

14. An attachment method for the connecting element (1') according to one of the claims 1, 5, 6 or 11 to 13 in which the attachment surface (44) is comprised in an inner portion of the anchor (30') and in an outer portion of the material, which can be penetrated by light, on a component surface (B), having the following steps:

applying glue onto the disk (40') and the anchor (30') of the connecting element (1') and/or the component surface (B),
placing the connecting element (1') onto the component surface (B), and
exposing the glue to light, wherein incident light creates through a plastic, which can be penetrated by light, of the disk (40') a first fixing of the connecting element (1') on the component surface (B).

15. The attachment method according to claim 14, which has the further step of:
supplying heat to the glue via the anchor (30') and/or the component surface (B), or curing the glue due to a sufficiently long curing time without additional supply of energy, such that thereby a further fixing of the connecting element (1') occurs on the component surface (B).

16. A production method for a connecting element according to one of the claims 1, 5, 6 or 11 to 13, in which the attachment surface (44) is comprised in an inner portion of the anchor (30') and in an outer portion of the material, which can be penetrated by light, having the following steps:

providing a retaining pin (10) having at least one pin section (20) and an anchor (30'), preferably made of metal by means of cold forming, a machining production method, injection molding, pressure casting or another metal forming method, or from plastic, wherein the anchor (30) is arranged as a flat structure transverse respect to the longitudinal axis (L) of the retaining pin (10) or at an angle not equal to 90° with respect to the longitudinal axis (L) of the retaining pin (10), and is formed closed or interrupted at least to some extent in the longitudinal direction of the retaining pin (10),

attaching a disk (40') of material, which can be penetrated by light, to the anchor (30'), such that the retaining pin (10) and the disk (40') are connected together secured against removal and an attachment surface (44) of the connecting element (1') arises which is comprised in an inner portion of the anchor (30') and in an outer portion of the material of the disc, which can be penetrated by light.

**Revendications**

1. Élément de liaison (1) à coller sur une surface de pièce (B), de manière à ce qu'un composant puisse être fixé à celle-ci, présentant les caractéristiques suivantes :

a. un boulon de retenue (10) avec une section de boulon (20) sur laquelle le composant peut être fixé, ainsi qu'un ancrage (30),

b. une assiette (40) constituée d'un matériau susceptible d'être traversé par une lumière, dans laquelle le boulon de retenue (10) est fixé telle façon par le biais de l'ancrage (30) avec une forme empêchant le retrait, que le boulon de retenue (10) est bloqué dans l'assiette (40) de manière sécurisée grâce à l'ancrage (30), dans lequel

c. l'ancrage (30) sous forme de structure plane est disposé perpendiculairement à l'axe longitudinal (L) du boulon de retenue (10) ou selon un angle différent de 90° par rapport à l'axe longitudinal (L) du boulon de retenue (10), tout en étant conçu de manière fermée ou partiellement interrompue dans la direction longitudinale du boulon de retenue (10), **caractérisé en ce que**

d. le boulon de retenue (10) est fixé de telle façon dans l'assiette (40) par le biais de l'ancrage (30) avec une forme empêchant la rotation, que le boulon de retenue (10) est bloqué en rotation dans l'assiette (40) grâce à l'ancrage (30), et l'ancrage plan (30) de celui-ci présente au moins une âme (34) s'étendant perpendiculairement à l'axe longitudinal du boulon de retenue (10) et faisant saillie sur un côté tourné vers la section de boulon (20) ou opposé à celle-ci ou sur les deux côtés, laquelle forme une sécurité anti-rotation de l'ancrage (30) dans l'assiette (40), ou **en ce que**

e. une surface de fixation (44) de l'élément de liaison (1') est constitué de l'ancrage (30') dans une région interne et du matériau susceptible d'être traversé par une lumière dans une région externe, dans lequel l'assiette (40) est moulée par injection sur l'ancrage (30), collée à celui-ci, encliquetée ou enclenchée dans l'ancrage (30), ou l'assiette (40) est soudée par friction à l'ancrage (30).

2. Élément de liaison (1) selon la revendication 1, dans lequel l'ancrage (30) présente l'âme (34) et dans lequel l'ancrage (30) présente une contre-dépouille par rapport à l'axe longitudinal (L) du boulon de retenue (10), sous la forme d'un élargissement (32) latéral, de préférence radial.

3. Élément de liaison (1) selon la revendication 1 ou 2, dans lequel l'ancrage (30) présente l'âme (34) et dont l'ancrage plan (30) est rond et présente, sur son côté opposé à la section de boulon (20), une pluralité d'âmes (34) s'étendant dans la direction radiale de l'ancrage (30).

4. Élément de liaison (1) selon la revendication 2, dans lequel l'ancrage (30) comporte un estampage (36) ou un moletage (38) fournissant une sécurité anti-rotation et une sécurité anti-retrait.

5. Élément de liaison (1) selon la revendication 1, dont l'assiette (40) présente une surface de recouvrement (42) adjacente au boulon de retenue (10) et une surface de fixation (44) pour le montage sur la surface de pièce (B), dans lequel la surface de recouvrement (42) comporte une rugosité de surface pour la diffusion d'une lumière incidente.

**6.** Élément de liaison (1) selon la revendication 5, dont la surface de recouvrement (42) et la surface de fixation (44) sont reliées par le biais d'une surface de liaison périphérique (46), laquelle est au moins partiellement concave.

**7.** Procédé de fabrication pour un élément de liaison (1) selon la revendication 1, dans lequel l'ancrage (30) présente l'âme (34), et présentant les étapes suivantes :

a. mise à disposition d'un boulon de retenue (10) comprenant au moins une section de boulon (20) et un ancrage (30), réalisés de préférence en métal par frappe à froid, à l'aide d'un procédé de fabrication par enlèvement de matière, par moulage par injection, par coulée sous pression ou à l'aide d'un autre procédé de déformation de métal ou en plastique, dans lequel l'ancrage (30) sous forme de structure plane est disposé perpendiculairement à l'axe longitudinal (L) du boulon de retenue (10) ou selon un angle différent de 90° par rapport à l'axe longitudinal (L) du boulon de retenue (10), tout en étant conçu de manière fermée ou partiellement interrompue dans la direction longitudinale du boulon de retenue (10), et l'ancrage plan (30) présente au moins une âme (34) s'étendant perpendiculairement à l'axe longitudinal du boulon de retenue (10) et faisant saillie sur un côté tourné vers la section de boulon (20) ou opposé à celle-ci ou sur les deux côtés,
b. montage d'une assiette (40) constituée d'un matériau susceptible d'être traversé par une lumière sur l'ancrage (30), de telle façon que le boulon de retenue (10) et l'assiette (40) sont reliés l'un à l'autre avec une sécurité anti-rotation et anti-retrait, où l'âme (34) s'étendant perpendiculairement à l'axe longitudinal du boulon de retenue (10) forme une sécurité anti-rotation de l'ancrage (30) dans l'assiette (40).

**8.** Procédé de fabrication selon la revendication 7, dans lequel, pour la fabrication de l'assiette (40), l'ancrage (30) est placé dans un moule et une matière plastique laissant passer la lumière est injectée dans le moule, de manière à créer une surface de recouvrement (42) adjacente au boulon de retenue (10) et une surface de fixation (44) pour le montage sur la surface de pièce (B), dans lequel la surface de recouvrement (42) présente une rugosité de surface pour la diffusion d'une lumière incidente et/ou une surface de liaison (46) concave reliant la surface de recouvrement (42) et la surface de fixation (44) entre elles.

**9.** Procédé de fabrication selon la revendication 7 ou 8, par emboutissage ou moletage du boulon de retenue (10), de manière à fournir l'ancrage (30).

**10.** Procédé de fixation pour l'élément de liaison (1) selon la revendication 1, dans lequel l'ancrage (30) présente l'âme (34), sur une surface de pièce (B), présentant les étapes suivantes :

a. application de colle sur l'assiette (40) de l'élément de liaison (1) et/ou sur la surface de pièce (B),
b. mise en place de l'élément de liaison (1) sur la surface de pièce (B), et
c. exposition de la colle à la lumière, la lumière incidente étant diffusée par une rugosité de surface de l'assiette (40) et/ou déviée vers la surface de pièce (B) par une forme de surface concave de l'assiette (40).

**11.** Élément de liaison (1') selon la revendication 1, 5 ou 6, dans lequel la surface de fixation (44) est constituée de l'ancrage (30') dans une région interne et du matériau susceptible d'être traversé par une lumière dans une région externe, et dont l'ancrage (30') est recouvert d'une couche de matière plastique sur le côté tourné vers le boulon de retenue (10) et le long du pourtour de l'ancrage (30'), laquelle forme l'assiette (40').

**12.** Élément de liaison (1') selon la revendication 1, 5, 6 ou 11, dans lequel la surface de fixation (44) est constituée de l'ancrage (30') dans une région interne et du matériau susceptible d'être traversé par une lumière dans une région externe, et lequel présente, sur la surface de fixation (44), une pluralité de points d'appui (49'), de préférence répartis de façon régulière, lesquels pontent une région de transition entre l'assiette (40') et l'ancrage (30') ou sont disposés sur l'ancrage et/ou sur l'assiette.

**13.** Élément de liaison (1') selon la revendication 1, 5, 6 ou 11 à 12, dans lequel la surface de fixation (44) est constituée de l'ancrage (30') dans une région interne et du matériau susceptible d'être traversé par une lumière dans une région externe, et dont l'ancrage (30') est chanfreiné dans la région de bord externe sur le côté opposé au boulon de retenue (10), pour soutenir la fixation des points d'appui (49') et/ou de l'assiette.

**14.** Procédé de fixation pour l'élément de liaison (1') selon l'une des revendications 1, 5, 6 ou 11 à 13, dans lequel la surface de fixation (44) est constituée de l'ancrage (30') dans une région interne et du matériau susceptible d'être traversé par une lumière dans une région externe, sur une surface de pièce (B), présentant les étapes suivantes :

- application de colle sur l'assiette (40') et l'ancrage (30') de l'élément de liaison (1') et/ou sur la surface de pièce (B),
- mise en place de l'élément de liaison (1') sur la surface de pièce (B), et
- exposition de la colle à la lumière, où la lumière incidente produit une première fixation de l'élément de liaison (1') sur la surface de pièce (B) à travers une matière plastique de l'assiette (40') susceptible d'être traversée par une lumière.

**15.** Procédé de fixation selon la revendication 14, présentant l'étape supplémentaire suivante :

- apport de chaleur sur l'ancrage (30') et/ou la surface de pièce (B) vers la colle ou durcissement de la colle en raison d'un temps de durcissement suffisamment long sans apport d'énergie supplémentaire, de manière à réaliser une autre fixation de l'élément de liaison (1') sur la surface de pièce (B) .

**16.** Procédé de fabrication pour un élément de liaison selon l'une des revendications 1, 5, 6 ou 11 à 13, dans lequel la surface de fixation (44) est constituée de l'ancrage (30') dans une région interne et du matériau susceptible d'être traversé par une lumière dans une région externe, et lequel présente les étapes suivantes :

- mise à disposition d'un boulon de retenue (10) comprenant au moins une section de boulon (20) et un ancrage (30'), réalisés de préférence en métal par frappe à froid, à l'aide d'un procédé de fabrication par enlèvement de matière, par moulage par injection, par coulée sous pression ou à l'aide d'un autre procédé de déformation de métal ou en plastique, dans lequel l'ancrage (30) sous forme de structure plane est disposé perpendiculairement à l'axe longitudinal (L) du boulon de retenue (10) ou selon un angle différent de 90° par rapport à l'axe longitudinal (L) du boulon de retenue (10), tout en étant conçu de manière fermée ou partiellement interrompue dans la direction longitudinale du boulon de retenue (10),
- montage d'une assiette (40') constituée d'un matériau susceptible d'être traversé par une lumière sur l'ancrage (30'), de manière à relier le boulon de retenue (10) et l'assiette (40') l'un à l'autre sans possibilité de retrait et à réaliser une surface de fixation (44) de l'élément de liaison (1'), laquelle est constituée de l'ancrage (30') dans une région interne et du matériau de l'assiette (40') susceptible d'être traversé par une lumière dans une région externe.

**FIG. 1**

**FIG. 2**

FIG. 3

FIG. 4

FIG. 5

FIG. 6

**FIG. 7**

**FIG. 8**

30

36

**FIG. 9**

30

38

**FIG.10**

**FIG. 11**

**FIG. 12**

1

10

40

A

**FIG. 13**

44        48

40

44        48

Detail A

**FIG. 14**

1

10

40

44

49

48

**FIG. 15**

**FIG. 16**

**FIG. 17**

FIG. 18

FIG. 19A

**FIG. 19B**

**FIG. 20**

# FIG. 21

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0741842 B1
- US 33532316 B
- DE 10359466 A1
- EP 0504957 A2
- US 4842912 A
- DE 102006012411 A1
- DE 102009031188 A1
- US 20090056865 A1